(19) Europäisches Patentamt
European Patent Office
Office européen des brevets

(11) EP 0 595 987 B1

(12) EUROPEAN PATENT SPECIFICATION

(45) Date of publication and mention of the grant of the patent:
**30.06.1999 Bulletin 1999/26**

(21) Application number: **92916471.3**

(22) Date of filing: **23.07.1992**

(51) Int Cl.[6]: **C10G 47/02**, C10G 47/16, B01J 29/04

(86) International application number:
**PCT/US92/06118**

(87) International publication number:
**WO 93/02159 (04.02.1993 Gazette 1993/04)**

# (54) HYDROCRACKING WITH ULTRA LARGE PORE SIZE CATALYSTS

HYDROCRACKEN UNTER VERWENDUNG EINES KATALYSATORS MIT ULTRA GROSSER PORENDIMENSION

HYDROCRAQUAGE AU MOYEN DE CATALYSEURS PRESENTANT UNE DIMENSION DE PORES EXTREMEMENT IMPORTANTE

(84) Designated Contracting States:
**BE DE FR GB IT NL**

(30) Priority: **24.07.1991 US 734850**
**24.07.1991 US 734983**

(43) Date of publication of application:
**11.05.1994 Bulletin 1994/19**

(73) Proprietor: **MOBIL OIL CORPORATION**
**Fairfax, Virginia 22037-0001 (US)**

(72) Inventors:
- **DEGNAN, Thomas, Francis, Jr.**
  **Moorestown, NJ 08057-2109 (US)**
- **KEVILLE, Kathleen, Marie**
  **Beaumont, TX 77707 (US)**
- **LANDIS, Michael, Eugene**
  **Sewell, NJ 08080 (US)**
- **MARLER, David, Owen**
  **Deptford, NJ 08096-2557 (US)**
- **MAZZONE, Dominick, Nicholas**
  **Wenonah, NJ 08090-1734 (US)**

(74) Representative: **Kador & Partner**
**Corneliusstrasse 15**
**80469 München (DE)**

(56) References cited:
**WO-A-91/11390**
**US-A- 4 176 051**
**US-A- 4 968 402**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 595 987 B1

## Description

This invention relates to a process for hydrocracking and more particularly to a process for catalytically hydrocracking petroleum feedstocks to produce distillate products of improved characteristics, especially low nitrogen content.

Hydrocracking is a process which has achieved widespread use in petroleum refining for converting various petroleum fractions to lighter and more valuable products, especially distillates such as jet fuels, diesel oils and heating oils. Hydrocracking is generally carried out in conjunction with an initial hydrotreating step in which the heteroatom-containing impurities in the feed are hydrogenated without a significant degree of bulk conversion. During this initial step, the heteroatoms, principally nitrogen and sulfur, are converted to inorganic form (ammonia, hydrogen-sulfide) and these gases may be removed prior to the subsequent hydrocracking step although the two stages may be combined in cascade without interstage separation as, for example, in the Unicracking-JHC process and in the moderate pressure hydrocracking process described in U.S. Patent No. 4,435,275.

In the second stage of the operation, the hydrotreated feedstock is contacted with a bifunctional catalyst which possesses both acidic and hydrogenation/dehydrogenation functionality. In this step, the characteristic hydrocracking reactions occur in the presence of the catalyst. Polycyclic aromatics in the feed are hydrogenated, and ring opening of aromatic and napthenic rings takes place together with dealkylation. Further hydrogenation may take place upon opening of the aromatic rings. Depending upon the severity of the reaction conditions, the polycyclic aromatics in the feed will be hydrocracked to paraffinic materials or, under less severe conditions, to monocylic aromatics as well as paraffins. Naphthenic and aromatic rings may be present in the product, for example, as substituted naphthenes and substituted polycyclic aromatics in the higher boiling products, depending upon the degree of operational severity.

The bifunctional catalyst typically comprises a metal component which provides the hydrogenation/dehydrogenation functionality and a porous, inorganic oxide support provides the acidic function. The metal component typically comprises a combination of metals from Groups IVA, VIA and VIIIA of the Periodic Table (IUPAC Table) although single metals may also be encountered. Combinations of metals from Groups VIA and VIIIA are especially preferred, such as nickel-molybdenum, cobalt-molybdenum, nickel-tungsten, cobalt-nickel- molybdenum and nickel-tungsten-titanium. Noble metals of Group VIIIA especially platinum or palladium may be encountered but are not typically used for treating high boiling feeds which tend to contain significant quantities of heteroatoms which function as poisons for these metals.

The porous support which provides the acidic functionality in the catalyst may comprise either an amorphous or a crystalline material or both. Amorphous materials have significant advantages for processing very high boiling feeds which contain significant quantities of bulky polycyclic materials (aromatics as well as polynapthenes) since the amorphous materials usually possesses pores extending over a wide range of sizes and the larger pores, frequently in the size range of 100 to 400 Angstroms (Å) are large enough to provide entry of the bulky components of the feed into the interior structure of the material where the acid-catalyzed reactions may take place. Typical amorphous materials of this kind include alumina and silica-alumina and mixtures of the two, possibly modified with other inorganic oxides such as silica, magnesia or titania.

Crystalline materials, especially the large pore size zeolites such as zeolites X and Y, have been found to be useful for a number of hydrocracking applications since they have the advantage, as compared to the amorphous materials, of possessing a greater degree of activity, which enables the hydrocracking to be carried out at lower temperatures at which the accompanying hydrogenation reactions are thermodynamically favored. In addition, the crystalline catalysts tend to be more stable in operation than the amorphous materials such as alumina. The crystalline materials may, however, not be suitable for all applications since even the largest pore sizes in these materials, typically 7.4 Å in the X and Y zeolites, are too small to permit access by various bulky species in the feed. For this reason, hydrocracking of residuals fractions and high boiling feeds has generally required an amorphous catalyst of rather lower activity.

EP-A-512 026, the content of which was published on 8 Aug 91, discloses crystalline mesoporous materials and their use to hydrocrack feeds such as residual oils.

It would be desirable, if possible, to integrate the advantages of the amorphous and the crystalline material in hydrocracking catalysts and although the possibility of using active supports for crystalline materials has been proposed, the difference in activity and selectivity between the amorphous and crystalline materials has not favored the utilization of such catalysts.

The crystalline hydrocracking catalysts generally tend to produce significant quantities of gasoline boiling range materials (approximately 330°F-, 165°C-) materials as product. Since hydrocracked gasolines tend to be of relatively low octane and require further treatment as by reforming before the product can be blended into the refinery gasoline pool, hydrocracking is usually not an attractive route for the production of gasoline. On the other hand, it is favorable to the production of distillate fractions, especially jet fuels, heating oils and diesel fuels since the hydrocracking process reduces the heteroatom impurities characteristically present in these fractions to the low level desirable for these products. The selectivity of crystalline aluminosilicate catalysts for distillate production may be improved by the

use of highly siliceous zeolites, for example, the zeolites possessing a silica: alumina ratio of 50:1 or more, as described in U.S. Patent No. 4,820,402 (Partridge et al), but even with this advance in the technology, it would still be desirable to integrate the characteristics of the amorphous materials with their large pore sizes capable of accommodating the bulky components of typical hydrocracking feeds, with the activity of the zeolite catalysts.

In fuels hydrocracking, the zeolite content of the catalyst is conventionally as high as possible for the desired acidity; conversely the amount of matrix which supports the metal component is limited and as the proportion of zeolite in the catalyst increases, the amount of support available for the metal component decreases with the result that the hydrogenation activity becomes limited at the high zeolite loadings requisite to fuels hydrocracking.

In principal, the advantages of the amorphous and the crystalline material in hydrocracking catalysts could be integrated by the use of active supports for crystalline materials but the difference in activity and selectivity between the amorphous and crystalline materials has not favored the utilization of such catalysts.

In the first embodiment of the present invention, we have found that a group of mesoporous siliceous materials having a novel and unique pore geometry may be used as the basis for hydrocracking catalysts of excellent properties. These mesoporous siliceous materials are characterized by a regular, crystalline microstructure with uniform pores having a cell diameter greater than 13 Å and typically in the range of 20 to 100 Å These crystalline catalytic materials are readily characterized by their X-ray diffraction pattern which includes at least one peak having a relative intensity of 100; they have a high surface area and porosity which is manifested by a benzene adsorption greater than 15 g. benzene per 100 g. of the crystalline material at 6.7 kPa (50 torr) and 25°C. Most prominent among these materials is a new metallosilicate having a structure identified as MCM-41 which is usually synthesized with Brønsted acid sites by incorporating a tetrahedrally coordinated trivalent element such as Al, Ga, B, or Fe within the silicate framework. Aluminosilicate materials of this type possess good thermal and chemical stability, properties favored for acid catalysis. The unique structure of these materials enables hydrocracking to be carried out under advantageous conditions with excellent results, especially in the reduction of heteroatom contaminants.

The hydrocracking is preferably carried out under moderate pressure conditions, typically at total system pressures of under 1500 psig (10,445 kPa abs) and in most cases under 1000 psig (7,000 kPa abs) or even lower, for example, under 800 psig (5620 kPa abs) using the mesoporous catalysts. These catalysts exhibit kerosene and distillate yield selectivities in fuels hydrocracking which are comparable to current state-of-the-art amorphous catalysts currently used in petroleum refineries. The bottoms produced by the present invention have product quality benefits (lower nitrogen and aromatics) compared to those produced from amorphous catalysts.

In the second embodiment of the present invention, we have found that the desirable features of the ultra-large pore size hydroprocessing catalysts and the zeolite hydroprocessing catalysts may be combined by utilizing the ultra-large poor size material to provide additional surface area for the support of the metal component of the catalyst while a zeolite provides the acidic functionality required for cracking activity. The resulting combination catalyst enables both the metal loading and the acidic functionality of the catalyst to be optimized with the result that good hydrogenation activity is obtained together with good cracking activity and the resulting catalysts are useful in fuels hydrocracking processes, especially where high conversion levels are desired.

Thus, according to the present invention, there is therefore provided a hydrocracking catalyst which comprises a metal hydrogenation/dehydrogenation component, a mesoporous siliceous material and a crystalline zeolite, preferably a large pore size zeolite such as zeolite USY. These catalysts are useful in hydrocracking processes in which a hydrocarbon feed, normally a high-boiling feed such as a gas oil, is subject to hydrocracking in the presence of the catalyst. The hydrocracking is preferably carried out under moderate pressure conditions and is capable of producing high-quality kerosene and distillate with good selectivity.

In the accompanying drawings, Figures 1 and 2 are graphical representations of the performance of the present hydrocracking catalysts, as described below in the Examples.

The feedstock for the present process is a heavy oil fraction having an initial boiling point no higher than 345°C (650°F), although the present catalysts may also be used for hydrocracking lighter fractions such as naphtha or Udex raffinates or extracts and light cycle oil. Suitable high boiling feedstocks include gas oils such as vacuum gas oil, coker gas oil, lube extracts produced by the solvent extraction of lube oil fractions using solvents such as phenol, furfural or N-methyl-pyrrolidone, visbreaker oil or deasphalted oil. Normally, the feedstock will have an extended boiling range, e.g. 345° to 590°C (650° to 1100°F), but may be of more limited ranges with certain feedstocks or alternatively may include or comprise non-distillable i.e. residual, fractions. The heteroatom is not critical: the nitrogen content will generally be in the range 200 to 1500 ppmw. Likewise, the sulfur content is not critical and typically may range as high as 5 percent by weight. Sulfur contents of 2.0 to 3.0 percent by weight are common. Typical feedstock boiling ranges will be 345° to 565°C (650° to 1050°F) or 345° to 510°C (650° to 950°F) but oils with a narrower boiling range may, of course, be processed, for example, those with a boiling range of 345° to 455°C (650° to 850°F). Heavy gas oils are often of this kind as are heavy cycle oils and other non-residual materials.

The heavy oil feeds will comprise high molecular weight long chain paraffins and high molecular weight aromatics with a large proportion of fused ring aromatics. During the processing, the fused ring aromatics are hydrogenated

by the metal function on the catalyst, naphthenes are cracked by the acidic catalyst and the paraffinic cracking products, together with paraffinic components of the initial feedstock undergo isomerization to iso-paraffins with some cracking to lower molecular weight materials. Hydrogenation of unsaturated side chains on the monocyclic cracking residues of the original polycyclics is catalyzed by the metal component of the hydrocracking catalyst to form substituted monocyclic aromatics which are highly desirable end products.

High quality fuel products exemplified by low sulfur, high hydrogen content, high cetane number (30-45) diesel fuel oils and similar high smoke point jet fuels (typical smoke point 20-25 mm) may be obtained with suitable VGO feeds.

Process Conditions

General

The feedstock is heated to an elevated temperature and is then passed over the hydrotreating and hydrocracking catalysts in the presence of hydrogen. Because the thermodynamics of hydrocracking become unfavorable at temperatures above 450°C (850°F) temperatures above this value will not normally be used. In addition, because the hydrotreating and hydrocracking reactions are exothermic, the feedstock need not be heated to the temperature desired in the catalyst bed which is normally in the range 290°, usually 360° to 440°C (550°, usually 675° to 825°F). At the beginning of the process cycle, the temperature employed will be at the lower end of this range but as the catalyst ages, the temperature may be increased in order to maintain the desired degree of activity.

The heavy oil feedstock is passed over the catalysts in the presence of hydrogen. The space velocity of the oil is usually in the range 0.1 to 10 LHSV preferably 0.2 to 2.0 LHSV and the hydrogen circulation rate from 250 to 1000 $n.1.1^{-1}$. (1400 to 5600 SCF/bbl) and more usually from 300 to 800 (1685 to 4500 SCF/bbl). Hydrogen partial pressure is usually at least 75% of the total system pressure with reactor inlet pressures normally being in the range of 400 to 1500 psig (2860 to 10445 kPa abs), more commonly from 800 to 1200 psig (5620 to 8375 kPa abs) for low to moderate pressure operation, which is the preferred mode with the present catalyst, although high pressure operation above 1500 psig (10445 kPa abs) is also feasible and with similar advantages, especially for fuels hydrocracking. In the high pressure mode, pressures from 1500 to 5000 psig (10445 to 34575 kPa abs) are typical although higher pressures may also be utilized with the upper limit usually being set by equipment constraints. When operating at low conversions, for example, less than 50 wt % conversion to 345°C- (650°F-) products, the pressure may be considerably lower than normal, conventional practices. We have found that total system pressures of 700 to 1200 psig (4930 to 8375 kPa abs) are satisfactory, as compared to the pressures of at least 1500 psig (10445 kPa) normally used in commercial hydrocracking processes. Low conversion may be obtained by suitable selection of other reaction parameters, e.g., temperature, space velocity, choice of catalyst, and even lower pressures may be used. Low pressures are desirable from the point of view of equipment design since less massive and consequently cheaper equipment will be adequate. Similarly, lower pressures usually influence less aromatic saturation and thereby permit economy in the total amount of hydrogen consumed in the process.

The relative proportions of the hydrocracking and the hydrotreating catalysts may be varied according to the feedstock in order to convert the nitrogen in the feedstock to ammonia before the charge passes to the hydrocracking step; the object is to reduce the nitrogen level of the charge to a point where the desired degree of conversion by the hydrocracking catalyst is attained with the optimum combination of space velocity and reaction temperature. The greater the amount of nitrogen in the feed, the greater then will be the proportion of hydrotreating (denitrogenation) catalyst relative to the hydrocracking catalyst. If the amount of nitrogen in the feed is low, the catalyst ratio may be as low as 10:90 (by volume, denitrogenation: hydrocracking). In general, however, ratios between 25:75 to 75:25 will be used. With many stocks an approximately equal volume ratio will be suiable, e.g. 40:60, 50:50 or 60:40.

The overall conversion may be maintained at varying levels depending on the nature of the feed and on the desired product characteristics. It is possible to operate the process at a low conversion level, less than 50 wt % to lower boiling products, usually 340°C- (650°F-) products from the heavy oil feedstocks used while still maintaining satisfactory product quality. The conversion may, of course, be maintained at even lower levels, e.g. 30 or 40 percent by weight. The degree of cracking to gas ($C_4$-) which occurs at these low conversion figures is correspondingly low and so is the conversion to naphtha (200°C-, 400°F-); the distillate selectivity of the process is accordingly high and overcracking to lighter and less desired products is minimized. It is believed that in cascade operation this effect is procured, in part, by the effect of the ammonia carried over from the first stage. Control of conversion may be effected by conventional expedients such as control of temperature, pressure, space velocity and other reaction parameters.

Surprisingly, it has been found that the presence of nitrogen and sulfur compounds in the second stage feed does not adversely affect catalyst aging in the absence of interstage separation and, in fact, the present hydrocracking catalysts have been found to be extremely effective in reducing the nitrogen content of the feed, as shown below.

The present process has the advantage that it may be operated under low to moderate pressure conditions in existing low pressure equipment. For example, if a desulfurizer is available, it may be used with relatively few modifications since the present process may be operated at low pressures comparable to the low severity conditions used in desulfurization. This may enable substantial savings in capital costs to be made since existing refinery units may be adapted to increase the pool of distillate products.

Hydrotreating

The feed is preferably passed over a hydrotreating catalyst before the hydrocracking catalyst in order to convert nitrogen and sulfur containing compounds to gaseous ammonia and hydrogen sulfide. At this stage, hydrocracking is minimized but partial hydrogenation of polycyclic aromatics proceeds, together with a limited degree of conversion to lower boiling (345°C-, 650°F-) products. The catalyst used in this stage may be a conventional denitrogenation (denitrification) catalyst. Catalysts of this type are relatively immune to poisoning by the nitrogenous and sulfurous impurities in the feedstock and, generally comprise a non-noble metal component supported on an amorphous, porous carrier such as silica, alumina, silica-alumina or silica-magnesia. Because extensive cracking is not desired in this stage of the process, the acidic functionality of the carrier may be relatively low compared to that of the subsequent hydrocracking catalyst. The metal component may be a single metal from Groups VIA and VIIIA of the Periodic Table such as nickel, cobalt, chromium, vanadium, molybdenum, tungsten, or a combination of metals such as nickel-molybdenum, cobalt-nickel-molybdenum, cobalt-molybdenum, nickel-tungsten or nickel-tungsten-titanium. Generally, the metal component will be selected for good hydrogen transfer activity; the catalyst as a whole will have good hydrogen transfer and minimal cracking characteristics. The catalyst should be pre-sulfided in the normal way in order to convert the metal component (usually impregnated into the carrier and converted to oxide) to the corresponding sulfide.

In the hydrotreating (denitrogenation) stage, the nitrogen and sulfur impurities are converted to ammonia and hydrogen sulfide. At the same time, the polycyclic aromatics are partially hydrogenated to form naphthenes and hydroaromatics which are more readily cracked in the second stage. The effluent from the first stage may be passed directly to the second or hydrocracking stage without the conventional interstage separation of ammonia or hydrogen sulfide. Hydrogen quenching may be carried out in order to control the effluent temperature and to control the catalyst temperature in the second stage. However, interstage separation of ammonia and hydrogen sulfide and light fractions may be carried out, especially with the noble metal hydrocracking catalysts which are more sensitive to the impurities.

The relative proportions of the hydrocracking and the hydrotreating catalysts may be varied according to the feedstock in order to convert the nitrogen in the feedstock to ammonia before the charge passes to the hydrocracking step; the object is to reduce the nitrogen level of the charge to a point where the desired degree of conversion by the hydrocracking catalyst is attained with the optimum combination of space velocity and reaction temperature. The greater the amount of nitrogen in the feed, the greater then will be the proportion of hydrotreating (denitrogenation) catalyst relative to the hydrocracking catalyst. If the amount of nitrogen in the feed is low, the catalyst ratio may be as low as 10:90 (by volume, denitrogenation: hydrocracking). In general, however, ratios between 25:75 to 75:25 will be used. With many stocks an approximately equal volume ratio will be suitable, e.g. 40:60, 50:50 or 60:40.

Hydrocracking

The effluent from the denitrogenation/ desulfurization stage is passed to the hydrocracking step to crack partially hydrogenated aromatics and carry out the other characteristic reactions which take place over the hydrocracking catalyst.

In the second embodiment of this invention, the hydrocracking is carried out in the presence of a catalyst which contains three essential components. The first component is the metal which provides the desired hydrogenation/dehydrogenation functionality and this component is supported on the two porous components, namely, the mesoporous crystalline material (which also provides some of the acidic functionality of the catalyst) and the crystalline zeolite which may ber a large pore zeolite such as zeolite USY, a medium (intermediate) pore size zeolite such as ZSM-5 or a small pote size zeolite such as erionite.

Catalyst Metal Component

The hydrocracking catalyst is a bifunctional catalyst which comprises a mesoporous crystalline material as described below as the component which acts as a support and in addition, provides the desired acidic functionality for the hydrocracking reactions, together with a hydrogenation-dehydrogenation component. The hydrogenation-dehydrogenation component is provided by a metal or combination of metals. Noble metals of Group VIIIA, especially palladium, platinum, or base metals of Groups IVA, VIA and VIIIA, especially chromium, molybdenum, tungsten, cobalt and nickel, may be used. The combination of at least one Group VIA metal such as tungsten with at least one Group VIIA metal such as nickel is particularly preferred for many applications, for example, combinations such as nickel-molybdenum, cobalt-nickel, nickel-tungsten, cobalt-nickel-molybdenum and nickel-tungsten-titanium. For certain applications palladium or platinum is preferred.

The content of the metal component will vary according to its catalytic activity. Thus, the highly active noble metals may be used in smaller amounts than the less active base metals. For example, 1 wt % or less palladium or platinum will be effective and in a preferred base metal combination, 7 wt % nickel and 2.1 to 21 wt % tungsten, expressed as metal. The present catalysts/support materials are, however, notable in that they are capable of including a greater proportion of metal than previous support materials because of their extraordinarily large surface area. The metal component may exceed 30% in a monolayer, and metal contents of up to 40% or even more may be achieved. The hydrogenation component can be exchanged onto the support materials when the metal is in the cationic form or alternatively may be impregnated into them or physically admixed with them. If the metal is to be impregnated into or exchanged onto the mesoporous support, it may be done, for example, by treating the zeolite with a palladium or platinum metal-containing ion. Suitable platinum compounds include chloroplatinic acid, platinous chloride and various compounds containing the platinum ammine complex. The metal compounds may be either compounds in which the metal is present in the cation of the compound and compounds in which it is present in the anion of the compound. Both types of compounds can be used. Palladium or platinum compounds in which the metal is in the form of a cation of cationic complex, e.g., $Pd(NH_3)_4Cl_2$ or $Pt(NH_3)_4Cl_2$ are particularly useful, as are anionic complexes such as the molybdenum, vanadate and metatungstate ions, where the metal component is to be impregnated into the support. Cationic forms of other metals are also very useful since they may be exchanged onto the crystalline material or impregnated into it.

In the first embodiment of this invention, the acidic component of the hydrocracking catalyst is a mesoporous crystalline material which is described in detail below. When it is used in the present catalysts, the mesoporous crystalline material is at least partly in the hydrogen form in order to provide the desired acidic functionality for the cracking reactions which are to take place. In the second embodiment, one of the two acidic components of the hydrocracking catalyst is a mesoporous crystalline material.

It may be desirable to incorporate the catalyst in another material resistant to the temperature and other conditions employed in the process. Such matrix materials include synthetic and naturally occurring substances such as inorganic materials, e.g. clay, silica and metal oxides. Matrix materials may themselves possess catalytic properties, generally of an acidic nature.

The catalyst may be treated by conventional pre-sulfiding treatments, e.g. by heating in the presence of hydrogen sulfide, to convert oxide forms of the metals such as CoO or NiO to their corresponding sulfides.

<u>Mesoporous Crystalline Component</u>

One of the two acidic components of the hydrocracking catalyst is a mesoporous crystalline material. This material is an inorganic, porous, non-layered crystalline phase material which can be characterized (in its calcined form) by pores with diameters of at least 13 Å and an X-ray diffraction pattern with at least one peak at a d-spacing greater than 18 Å with a relative intensity of 100. The high porosity of these materials is manifested by a high sorption capacity which, for benzene, is greater than 15 grams of benzene per 100 grams of the the material at 6.7 kPa (50 torr) and 25°C.

The preferred form of the crystalline material is an inorganic, porous, non-layered material having a hexagonal arrangement of uniformly-sized pores with a maximum perpendicular cross-section pore dimension of at least 13 Å, and typically within the range of from 13 Å to 200 Å. A preferred form of this crystalline composition, identified as MCM-41, exhibits a hexagonal electron diffraction pattern that can be indexed with a $d_{100}$ value greater than 18 Å, and a benzene adsorption capacity of greater than 15 grams benzene/100 grams crystal at 6.7 kPa (50 torr) and 25°C.

The inorganic, non-layered mesoporous crystalline material used as a component of the catalyst has the following composition:

$$M_{n/q}(W_a\,X_b\,Y_c\,Z_d\,0_h)$$

wherein W is a divalent element, such as a divalent first row transition metal, e.g. manganese, cobalt and iron, and/or magnesium, preferably cobalt; X is a trivalent element, such as aluminum, boron, iron and/or gallium, preferably aluminum; Y is a tetravalent element such as silicon and/or germanium, preferably silicon; Z is a pentavalent element, such as phosphorus; M is one or more ions, such as, for example, ammonium, Group IA, IIA and VIIB ions, usually hydrogen, sodium and/or fluoride ions; n is the charge of the composition excluding M expressed as oxides; q is the weighted molar average valence of M; n/q is the number of moles or mole fraction of M; a, b, c, and d are mole fractions of W, X, Y and Z, respectively; h is a number of from 1 to 2.5; and (a+b+c+d) = 1.

A preferred embodiment of the above crystalline material is when (a+b+c) is greater than d, and h = 2. A

further embodiment is when a and d = 0, and h = 2. The preferred materials for use in making the present hydrocracking catalysts are the aluminosilicates.

In the as-synthesized form, the catalytic material has a composition, on an anhydrous basis, expressed empirically as follows:

$$rRM\ M_{n/q}(W_a\ X_b\ Y_c\ Z_d\ 0_h)$$

where R is the total organic material not included in M as an ion, and r is the coefficient for R, i.e. the number of moles or mole fraction of R.

The M and R components are associated with the material as a result of their presence during crystallization, and are easily removed or, in the case of M, replaced by post-crystallization methods described below.

To the extent desired, the original M, e.g. sodium or chloride, ions of the as-synthesized material of this invention can be replaced in accordance with conventional ion-exchange techniques. Preferred replacing ions include metal ions, hydrogen ions, hydrogen precursor, e.g. ammonium, ions and mixtures of these ions. Particularly preferred ions are those which provide the desired metal functionality in the final hydrocracking catalyst. These include hydrogen, rare earth metals and metals of Groups VIIA (e.g. Mn), VIIIA (e.g. Ni),IB (e.g. Cu), IVB (e.g. Sn), and VIIB (e.g. F) of the Periodic Table of the Elements and mixtures of these ions.

The crystalline (by which is meant, having sufficient order to provide a diffraction pattern such as, for example, by X-ray, electron or neutron diffraction, following calcination with at least one peak) mesoporous material may be characterized by its structure, which includes extremely large pore windows as well as by its high sorption capacity. The term "mesoporous" is used here to indicate crystals having uniform pores within the range of from 13 Å to 200 Å. The mesoporous materials have uniform pores within the range of from 13 Å to 200 Å, more usually from 15 Å to 100 Å. Since these pores are significantly larger than those of other crystalline materials, it is appropriate to refer to them as ultra-large pore size materials. For the purposes of this application, a working definition of "porous" is a material that adsorbs at least 1 gram of a small molecule, such as Ar, $N_2$, n-hexane or cyclohexane, per 100 grams of the solid.

The catalytic material can be distinguished from other porous inorganic solids by the regularity of its large open pores, whose pore size more nearly resembles that of amorphous or paracrystalline materials, but whose regular arrangement and uniformity of size (pore size distribution within a single phase of, for example, ± 25%, usually ± 15% or less of the average pore size of that phase) resemble more those of crystalline framework materials such as zeolites. The calcined inorganic, non-layered crystalline material may also be characterized as having a pore size of 13 Å or greater as measured by physisorption measurements, described below. Pore size is considered a maximum perpendicular cross-section pore dimension of the crystal.

The size of the pores in the present mesoporous catalytic materials is large enough that the spatiospecific selectivity with respect to transition state species in reactions such as cracking is minimized (Chen et al., "Shape Selective Catalysis in Industrial Applications", 36 CHEMICAL INDUSTRIES, pgs. 41-61 (1989) to which reference is made for a discussion of the factors affecting shape selectivity). Diffusional limitations are also minimized as a result of the very large pores. For these reasons, the present compositions are especially useful for catalyzing the hydrocracking reactions with high boiling feeds containing components with bulky molecular configurations.

The preferred materials have a hexagonal arrangement of large open channels that can be synthesized with open internal diameters from 13 Å to 200 Å. The term "hexagonal" is intended to encompass not only materials that exhibit mathematically perfect hexagonal symmetry within the limits of experimental measurement, but also those with significant observable deviations from that ideal state. A working definition as applied to the microstructure of the present invention would be that most channels in the material would be surrounded by six nearest neighbor channels at roughly the same distance. Defects and imperfections will cause significant numbers of channels to violate this criterion to varying degrees, depending on the quality of the material's preparation. Samples which exhibit as much as ± 25% random deviation from the average repeat distance between adjacent channels still clearly give recognizable images of the present ultra-large pore materials. Comparable variations are also observed in the $d_{100}$ values from the electron diffraction patterns.

The most regular preparations of the material of the present invention give an X-ray diffraction pattern with a few distinct maxima in the extreme low angle region. The positions of these peaks approximately fit the positions of the hkO reflections from a hexagonal lattice. The X-ray diffraction pattern, however, is not always a sufficient indicator of the presence of these materials, as the degree of regularity in the microstructure and the extent of repetition of the structure within individual particles affect the number of peaks that will be observed. Indeed, preparations with only one distinct peak in the low angle region of the X-ray diffraction pattern have been found to contain substantial amounts of the material in them. Other techniques to illustrate the microstructure of this material are transmission electron microscopy and electron diffraction. Properly oriented specimens of the material show a hexagonal arrangement of large channels and the corresponding electron diffraction pattern gives an approximately hexagonal arrangement of

diffraction maxima. The $d_{100}$ spacing of the electron diffraction patterns is the distance between adjacent spots on the hkO projection of the hexagonal lattice and is related to the repeat distance $a_0$ between channels observed in the electron micrographs through the formula $d_{100} = a_0\sqrt{3}/2$. This $d_{100}$ spacing observed in the electron diffraction patterns corresponds to the d-spacing of a low angle peak in the X-ray diffraction pattern of the material. The most highly ordered preparations of the material obtained so far have 20-40 distinct spots observable in the electron diffraction patterns. These patterns can be indexed with the hexagonal hkO subset of unique reflections of 100, 110, 200, 210, etc., and their symmetry-related reflections.

In its calcined form, the crystalline material may be further characterized by an X-ray diffraction pattern with at least one peak at a position greater than 18 Angstrom Units d-spacing (4.909° 2_ for Cu K-alpha radiation) which corresponds to the $d_{100}$ value of the electron diffraction pattern of the material, and an equilibrium benzene adsorption capacity of greater than 15 grams benzene/100 grams crystal at 6.7 kPa (50 torr) and 25°C (basis: crystal material having been treated in an attempt to insure no pore blockage by incidental contaminants, if necessary).

The equilibrium benzene adsorption capacity characteristic of this material is measured on the basis of no pore blockage by incidental contaminants. For instance, the sorption test will be conducted on the crystalline material phase having any pore blockage contaminants and water removed by ordinary methods. Water may be removed by dehydration techniques, e.g. thermal treatment. Pore blocking inorganic amorphous materials, e.g. silica, and organics may be removed by contact with acid or base or other chemical agents such that the detrital material will be removed without detrimental effect on the crystal.

More particularly, the calcined crystalline non-layered material may be characterized by an X-ray diffraction pattern with at least two peaks at positions greater than 10 Å d-spacing (8.842 °_ for Cu K-alpha radiation), at least one of which is at a position greater than about 18 Angstrom Units d-spacing, and no peaks at positions less than 10 Å d-spacing with relative intensity greater than 20% of the strongest peak. Still more particularly, the X-ray diffraction pattern of the calcined material of this invention will have no peaks at positions less than 10 Å d-spacing with relative intensity greater than 10% of the strongest peak. In any event, at least one peak in the X-ray diffraction pattern will have a d-spacing that corresponds to the $d_{100}$ value of the electron diffraction pattern of the material.

X-ray diffraction data were collected on a Scintag PAD X automated diffraction system employing theta-theta geometry, Cu K-alpha radiation, and an energy dispersive X-ray detector. Use of the energy dispersive X-ray detector eliminated the need for incident or diffracted beam monochromators. Both the incident and diffracted X-ray beams were collimated by double slit incident and diffracted collimation systems. The slit sizes used, starting from the X-ray tube source, were 0.5, 1.0, 0.3 and 0.2 mm, respectively. Different slit systems may produce differing intensities for the peaks. The materials of the present invention that have the largest pore sizes may require more highly collimated incident X-ray beams in order to resolve the low angle peak from the transmitted incident X-ray beam.

The diffraction data were recorded by step-scanning at 0.04 degrees of 2_, where _ is the Bragg angle, and a counting time of 10 seconds for each step. The interplanar spacings, d's, were calculated in Å (A), and the relative intensities of the lines, $I/I_o$, where $I_o$ is one-hundredth of the intensity of the strongest line, above background, were derived with the use of a profile fitting routine. The intensities were uncorrected for Lorentz and polarization effects. The relative intensities are given in terms of the symbols vs = very strong (75-100), s = strong (50-74), m = medium (25-49) and w = weak (0-24). The diffraction data listed as single lines may consist of multiple overlapping lines which under certain conditions, such as very high experimental resolution or crystallographic changes, may appear as resolved or partially resolved lines. Typically, crystallographic changes can include minor changes in unit cell parameters and/or a change in crystal symmetry, without a substantial change in structure. These minor effects, including changes in relative intensities, can also occur as a result of differences in cation content, framework composition, nature and degree of pore filling, thermal and/or hydrothermal history, and peak width/shape variations due to particle size/shape effects, structural disorder or other factors known to those skilled in the art of X-ray diffraction.

The equilibrium benzene adsorption capacity is determined by contacting the material of the invention, after dehydration or calcination at, for example, 540°C for at least one hour and other treatment, if necessary, in an attempt to remove any pore blocking contaminants, at 25°C and 50 torr benzene until equilibrium is reached. The weight of benzene sorbed is then determined as described below.

The ammonium form of the catalytic material may be readily converted to the hydrogen form by thermal treatment (calcination). This thermal treatment is generally performed by heating one of these forms at a temperature of at least 400°C for at least 1 minute and generally not longer than 20 hours, preferably from 1 to 10 hours. While subatmospheric pressure can be employed for the thermal treatment, atmospheric pressure is desired for reasons of convenience, such as in air, nitrogen, ammonia, etc. The thermal treatment can be performed at a temperature up to 750°C.

The crystalline material can be prepared by one of several methods, each with particular limitations.

A first method involves a reaction mixture having an $X_2O_3/YO_2$ mole ratio of from 0 to 0.5, but an $Al_2O_3/SiO_2$ mole ratio of from 0 to 0.01, a crystallization temperature of from 25° to 250°C, preferably from 50° to 175°C, and an organic directing agent, hereinafter more particularly described, or, preferably a combination of that organic directing

agent plus an additional organic directing agent, described below. This first method comprises preparing a reaction mixture containing sources of, for example, alkali or alkaline earth metal (M), e.g. sodium or potassium, cation if desired, one or a combination of oxides selected from the group consisting of divalent element W, e.g. cobalt, trivalent element X, e.g. aluminum, tetravalent element Y, e.g. silicon, and pentavalent element Z, e.g. phosphorus, an organic (R) directing agent, described below, and a solvent or solvent mixture, such as, for example, $C_1$-$C_6$ alcohols, $C_1$-$C_6$ diols and/or water, especially water. The reaction mixture has a composition, in terms of mole ratios of oxides, within the following ranges:

| Reactants | Useful | Preferred |
|---|---|---|
| $X_2O_3/YO_2$ | 0 to 0.5 | 0.001 to 0.5 |
| $Al_2O_3/SiO_2$ | 0 to 0.01 | 0.001 to 0.01 |
| $X_2O_3/(YO_2+Z_2O_5)$ | 0.1 to 100 | 0.1 to 20 |
| $X_2O_3/(YO_2+WO+Z_2O_5)$ | 0.1 to 100 | 0.1 to 20 |
| Solvent/ $(YO_2+WO+Z_2O_5+X_2O_3)$ | 1 to 1500 | 5 to 1000 |
| $OH^-/YO_2$ | 0 to 10 | 0 to 5 |
| $(M_{2/e}O+R_{2/f}O)(YO_2+WO+Z_2O_5+X_2O_3)$ | 0.01 to 20 | 0.05 to 5 |
| $M_{2/e}O/(YO_2+WO+Z_2O_5+X_2O_3)$ | 0 to 10 | 0 to 5 |
| $R_{2/f}O/(YO_2+WO+Z_2O_5+X_2O_3)$ | 0.01 to 2.0 | 0.03 to 1.0 |

where e and f are the weighted average valences of M and R, respectively.

In this first method, when no Z and/or W oxides are added to the reaction mixture, the pH is important and must be maintained at from 9 to 14. When Z and/or W oxides are present in the reaction mixture, the pH is not narrowly important for synthesis of the present crystalline material. In this, as well as the following methods for synthesis of the present material the $R_{2/f}O/(YO_2+WO+Z_2O_5+X_2O_3)$ ratio is important. When this ratio is less than 0.01 or greater than 2.0, impurity products tend to be synthesized at the expense of the desired crystalline material.

A second method for synthesis of the crystalline material involves a reaction mixture having an $X_2O_3/YO_2$ mole ratio of from 0 to 0.5, a crystallization temperature of from 25°C to 250°C, preferably from 50°C to 175°C, and two separate organic directing agents, i.e. the organic and additional organic directing agents, described below. This second method comprises preparing a reaction mixture containing sources of, for example, alkali or alkaline earth metal (M), e.g. sodium or potassium, cation if desired, one or a combination of oxides selected from the group consisting of divalent element W, e.g. cobalt, trivalent element X, e.g. aluminum, tetravalent element Y, e.g. silicon, and pentavalent element Z, e.g. phosphorus, a combination of organic directing agent and additional organic directing agent (R), each described below, and a solvent or solvent mixture, such as, for example, $C_1$-$C_6$ alcohols, $C_1$-$C_6$ diols and/or water, especially water. The reaction mixture has a composition, in terms of mole ratios of oxides, within the following ranges:

| Reactants | Useful | Preferred |
|---|---|---|
| $X_2O_3/YO_2$ | 0 to 0.5 | 0.001 to 0.5 |
| $X_2O_3/(YO_2+Z_2O_5)$ | 0.1 to 100 | 0.1 to 20 |
| $X_2O_3/(YO_2+WO+Z_2O_5)$ | 0.1 to 100 | 0.1 to 20 |
| Solvent/$(YO_2+WO+Z_2O_5+X_2O_3)$ | 1 to 1500 | 5 to 1000 |
| $OH^-/YO_2$ | 0 to 10 | 0 to 5 |
| $(M_{2/e}O+R_{2/f}O)/(YO_2+WO+Z_2O_5+X_2O_3)$ | 0.01 to 20 | 0.05 to 5 |
| $M_{2/e}O/(YO_2+WO+Z_2O_5+X_2O_3)$ | 0 to 10 | 0 to 5 |
| $R_{2/f}O/(YO_2+WO+Z_2O_5+X_2O_3)$ | 0.1 to 2.0 | 0.12 to 1.0 |

where e and f are the weighted average valences of M and R, respectively.

In this second method, when no Z and/or W oxides are added to the reaction mixture, the pH is important and must be maintained at from 9 to 14. When Z and/or W oxides are present in the reaction mixture, the precise value of the pH is not important for crystallization.

A third method for synthesis of the crystalline material is where X comprises aluminum and Y comprises silicon, the crystallization temperature must be from 25° to 175°C, preferably from 50 to 150°C, and an organic directing agent, described below, or, preferably a combination of that organic directing agent plus an additional organic agent, described below, is used. This third method comprises preparing a reaction mixture containing sources of, for example, alkali or alkaline earth metal (M), e.g. sodium or potassium, cation if desired, one or more sources of aluminum and/or silicon, an organic (R) directing agent, hereinafter more particularly described, and a solvent or solvent mixture,

such as, for example $C_1$-$C_6$ alcohols, $C_1$-$C_6$ diols and/or water, especially water. The reaction mixture has a composition, in terms of mole ratios of oxides, within the following ranges:

| Reactants | Useful | Preferred |
|---|---|---|
| $Al_2O_3/SiO_2$ | 0 to 0.5 | 0.001 to 0.5 |
| Solvent/$SiO_2$ | 1 to 1500 | 5 to 1000 |
| $OH^-/SiO_2$ | 0 to 10 | 0 to 5 |
| $(M_{2/e}O+R_{2/f}O)/(SiO_2+Al_2O_3)$ | 0.01 to 20 | 0.05 to 5 |
| $M_{2/e}O/(SiO_2+Al_2O_3)$ | 0 to 5 | 0 to 3 |
| $R_{2/f}O/(SiO_2+Al_2O_3)$ | 0.01 to 2 | 0.03 to 1 |

where e and f are the weighted average valences of M and R, respectively.

In this third method, the pH is important and must be maintained at from 9 to 14. This method involves the following steps:

(1) Mix the organic (R) directing agent with the solvent or solvent mixture such that the mole ratio of solvent/$R_{2/f}O$ is within the range of from 50 to 800, preferably from 50 to 500. This mixture constitutes the "primary template" for the synthesis method.
(2) To the primary template mixture of step (1) add the sources of oxides, e.g. silica and/or alumina such that the ratio of $R_{2/f}O/(SiO_2+Al_2O_3)$ is within the range of from 0.01 to 2.0.
(3) Agitate the mixture resulting from step (2) at a temperature of from 20° to 40°C, preferably for from 5 minutes to 3 hours.
(4) Allow the mixture to stand with or without agitation, preferably at a temperature of from 20° to 100°C, and preferably from 10 minutes to 24 hours.
(5) Crystallize the product from step (4) at a temperature of from 50 to 175°C, preferably from 1 hour to 72 hours. Crystallization temperatures higher in the given ranges are most preferred.

A fourth method for the present synthesis involves the reaction mixture used for the third method, but the following specific procedure with tetraethylorthosilicate the source of silicon oxide:

(1) Mix the organic (R) directing agent with the solvent or solvent mixture such that the mole ratio of solvent/$R_{2/f}O$ is within the range of from 50 to 800, preferably from 50 to 500. This mixture constitutes the "primary template" for the synthesis method.
(2) Mix the primary template mixture of step (1) with tetraethylorthosilicate and a source of aluminum oxide, if desired, such that the $R_{2/f}O/SiO_2$ mole ratio is in the range of from 0.5 to 2.0.
(3) Agitate the mixture resulting from step (2) for from 10 minutes to 6 hours, preferably from 30 minutes to 2 hours, at a temperature of from 0° to 25°C, and a pH of less than 12. This step permits hydrolysis/polymerization to take place and the resultant mixture will appear cloudy.
(4) Crystallize the product from step (3) at a temperature of from 25° to 150°C, preferably from 95° to 110°C, for from 4 to 72 hours, preferably from 16 to 48 hours.

In each of the above methods, batch crystallization of the crystalline material can be carried out under either static or agitated, e.g. stirred, conditions in a suitable reactor vessel, such as for example, polypropylene jars or teflon lined or stainless steel autoclaves. Crystallization may also be conducted continuously in suitable equipment. The total useful range of temperatures for crystallization is noted above for each method for a time sufficient for crystallization to occur at the temperature used, e.g. from 5 minutes to 14 days. The crystals are then separated from the liquid and recovered. Following the synthesis,the crystalline material should be subjected to treatment to remove part or all of any organic constituent.

When a source of silicon is used in the synthesis method, it is preferred to use-at least in part an organic silicate, such as, for example, a quaternary ammonium silicate. Non-limiting examples of such a silicate include tetramethylammonium silicate and tetraethylorthosilicate.

By adjusting conditions of the synthesis reaction for each method, like temperature, pH and time of reaction, etc., within the above limits, various embodiments of the present non-layered crystalline material with a desired average pore size may be prepared. In particular, changing the pH, the temperature or the reaction time may promote formation of product crystals with different average pore size.

Non-limiting examples of various combinations of W, X, Y and Z contemplated for the first and second synthesis methods include:

| W | X | Y | Z |
|---|---|---|---|
| -- | Al | Si | -- |
| -- | Al | -- | P |
| -- | Al | Si | P |
| Co | Al | -- | P |
| Co | Al | Si | P |
| -- | -- | Si | -- |

including the combinations of W being Mg, or an element selected from the divalent first row transition metals, e.g. Mn, Co and Fe; X being B, Ga or Fe; and Y being Ge.

An organic directing agent for use in each of the above methods for synthesizing the present material from the respective reaction mixtures is an ammonium or phosphonium ion of the formula $R_1R_2R_3R_4Q^+$, i.e.:

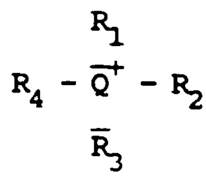

where Q is nitrogen or phosphorus and wherein at least one of $R_1$, $R_2$, $R_3$ and $R_4$ is aryl or alkyl of from 6 to 36 carbon atoms, e.g. $-C_6H_{13}$ , $-C_{10}H_{21}$, $-C_{16}H_{33}$ and $-C_{18}H_{37}$, or combinations thereof, the remainder of $R_1$, $R_2$, $R_3$ and $R_4$ being selected from hydrogen, alkyl of from 1 to 5 carbon atoms and combinations of these. The compound from which the above ammonium or phosphonium ion is derived may be, for example, the hydroxide, halide, silicate, or mixtures of these.

In the first and third methods above it is preferred to have an additional organic directing agent and in the second method it is required to have a combination of the above organic directing agent and an additional organic directing agent. That additional organic directing agent is the ammonium or phosphonium ion of the above directing agent formula wherein $R_1$, $R_2$, $R_3$ and $R_4$ together or separately are selected from the group consisting of hydrogen and alkyl of 1 to 5 carbon atoms and combinations thereof. Any such combination of organic directing agents go to make up "R" and will be in molar ratio of 100/1 to 0.01/1, first above listed organic directing agent/additional organic directing agent.

The particular effectiveness of the required directing agent, when compared with other such agents known to direct synthesis of one or more other crystal structures, is believed due to its ability to function as a template in the above reaction mixture in the nucleation and growth of the desired ultra-large pore crystals with the limitations discussed above. Non-limiting examples of these directing agents include cetyltrimethylammonium, cetyltrimethylphosphonium, benzyltrimethylammonium, cetylpyridinium, myristyltrimethylammonium, decyltrimethylammonium, dodecyltrimethylammonium and dimethyldidodecylammonium.

The reaction mixture components can be supplied by more than one source. The reaction mixture can be prepared either batchwise or continuously. Crystal size and crystallization time of the new crystalline material will vary with the nature of the reaction mixture employed and the crystallization conditions.

The crystals prepared by the synthesis procedure can be shaped into a wide variety of particle sizes. Generally speaking, the particles can be in the form of a powder, a granule, or a molded product, such as an extrudate having particle size sufficient to pass through a 2 mesh (Tyler) screen and be retained on a 400 mesh (Tyler) screen. In cases where the catalyst is molded, such as by extrusion, the crystals can be extruded before drying or partially dried and then extruded.

The porous crystalline material may be used in a matrixed or unmatrixed form for this purpose and may suitably be formed into extrudates, pellets or other shapes to permit the passage of gases over the catalyst with the minimum pressure drop. For this purpose, it may be matrixed or bound with active and inactive materials and synthetic or naturally occurring zeolites as well as inorganic materials such as clays, silica and/or metal oxides such as alumina, titania and/or zirconia. The latter may be either naturally occurring or in the form of gelatinous precipitates or gels including mixtures of silica and metal oxides. Use of a material in conjunction with the crystalline material, i.e. combined therewith or present during synthesis of the new crystal, which is active, tends to change the conversion and/or selectivity of the catalyst in certain organic conversion processes. Inactive materials suitably serve as diluents to control the amount of conversion in a given process so that products can be obtained economically and orderly without employing other means for controlling the rate of reaction. It may be desirable to provide at least a part of the foregoing matrix materials in colloidal form so as to facilitate extrusion of the bound catalyst components(s). The relative proportions of finely divided crystalline material and matrix vary widely, with the crystal content ranging from 1 to 90 percent by weight and more usually, particularly when the composite is prepared in the form of beads, in the range of 2 to 80 wt % of the composite.

Zeolite Component

In the second embodiment of the present invention, the hydrocracking catalyst comprises a third component which is a crystalline metallosilicate conventionally referred to as a zeolite. Zeolites are conventionally classified as large pore-size, intermediate pore-size or small pore-size, depending upon the structure of the zeolite and this form of nomenclature is used here although the significantly larger pores sizes of the mesoporous materials makes it inappropriate to refer to zeolites such as zeolite Y as "large pore" on the same basis. Since these designations are recognized for the zeolites, they are, however, used here in reference to them.

The intracrystalline pore volume of the large pore-size materials is accessible through apertures formed of rings of twelve $SiO_4$ tetrahedra which in the zeolites typical of this class have a diameter of at least 7.4Å. The medium or intermediate pore size pentasil zeolites, such as ZSM-5, ZSM-11 and ZSM-23 have a 10-ring system and the small pore size zeolites such as erionite and zeolite A have an 8-ring system. These characteristic structural elements are discussed in Hoelderich, Zeolites: Catalysts For Organic Syntheses, Angewandte Chemie 27, No. 2, 226 - 246 (1988). Rather than make a determination of the zeolite type according to structure it is often more convenient, however, to classify by means of the Constraint Index of the zeolite, as described by Frilette in J. Catalysis 67, 218 - 222 (1981). Consistent with the classification implied by Frilette, the large pore size zeolites with 12-ring windows such as the faujasite zeolites have Constraint Indices below 1 and the intermediate pore sized zeolites exhibit a Constraint Index of 1 to 12, ranking them though the values characteristic of the small size zeolite such as zeolite A and erionite. The method by which constraint index is determined is disclosed in U.S. Patent No. 4,016,218, to which reference is made for a disclosure of the method and of the Constraint Indices for typical zeolites.

The metallosilicate zeolites which are preferred for use in the present catalysts are the aluminosilicate large pore size zeolites, with preference given to the zeolites with the faujasite structure, especially zeolite Y and the high silica forms of zeolite Y such as zeolite USY. The large pore size zeolites are preferred because their relatively open structure permits access by many of the bulky molecular species encountered in the high-boiling feeds commonly used in hydrocracking, so that consistent reduction in boiling range is achieved. The aluminosilicate zeolites provide a high-level of acid activity which results in high levels of conversion being obtainable at acceptable space velocities and temperatures and the high silica forms of zeolite Y, especially USY, have excellent long term stability for use in hydrocracking processes.

The medium pore size zeolites such as ZSM-5, ZSM-11, ZSM-12, ZSM-23 and ZSM-35 may also be in the present hydrocracking catalysts and may be preferred for certain applications, especially where hydrocracked products of low pour point are desired. Again, the medium pore size zeolites are preferbly used in the aluminosilicate from since this is the form in which the activity is usually the greatest. The medium pore size zeolites may be used in combination with the large pore size zeolites to form a hydrocracking catalyst with three (or more) acidic components, for example, MCM-41, USY and ZSM-5. The relative amounts of the three materials may be adjusted in accordance with the characteristics of the feed and of the desired products.

The use of the small pore size zeolites and of dense phase or clathrate zeolites such as ZSM-39 will not normally be favored since these zeolites are no longer used to a great extent in refining processes since they offer no advantages over the large and medium pore size zeolites, but they are not, in principle, to be excluded.

The relative amounts of the mesoporous support material with its associated metal component and the zeolite may be adjusted according to the demands of the intended use and this will normally require a consideration of the hydrogenation activity and cracking activity which are required in the catalyst. In most cases, a ratio of from 0.5:2 to 2:0.5 for the porous components will be typical, but ratios outside this range may be employed if desired, usually within the range of 10:1 to 1:10. A 1:1 ratio between the two porous components will be suitable for many hydrocracking applications.

The relatively smaller pore size molecular sieve zeolite can be composited with the mesoporous crystalline component in the same catalyst particle or alternatively they may be mixed as separate particles or staged as separate sections or zones of the hydrocracker. If the latter, the mesoporous components with its associated metal is preferably located upstream of the smaller pore sized molecular sieve component in order to promote the hydrogenation reactions before the feed encounters the more highly acidic zeolite which carries out the cracking.

If the mesoporous crystalline component and the relatively smaller pore size molecular sieve component are

combined in the same catalyst particle or combined as separate particles in a physical mixture, the metal component may be incorporated by exchange or impregnation into the material using conventional techniques. Because the mesoporous crystalline component has a higher surface area than the zeolite component, the metal will be preferentially sorbed on the mesoporous component.

The porous crystalline materials, i.e the mesoporous material and the zeolite component are suitably used in a matrixed form in the catalysts and may suitably be formed into extrudates, pellets or other shapes to permit the passage of gases over the catalyst with the minimum pressure drop. The crystalline components may be matrixed or bound with active and inactive materials and synthetic or naturally occurring zeolites as well as inorganic materials such as clays, silica and/or metal oxides such as alumina, titania and/or zirconia. The latter may be either naturally occurring or in the form of gelatinous precipitates or gels including mixtures of silica and metal oxides. Use of a material in conjunction with the crystalline material, i.e. combined therewith or present during synthesis of the new crystal, which is active, tends to change the conversion and/or selectivity of the catalyst in certain organic conversion processes. Inactive materials suitably serve as diluents to control the amount of conversion in a given process so that products can be obtained economically and orderly without employing other means for controlling the rate of reaction. It may be desirable to provide at least a part of the foregoing matrix materials in colloidal form so as to facilitate extrusion of the bound catalyst components(s). The relative proportions of finely divided crystalline material and matrix vary widely, with the crystal content ranging from 1 to 90 percent by weight and more usually, particularly when the composite is prepared in the form of beads, in the range of 2 to 80 wt % of the composite.

The catalyst may be treated by conventional pre-sulfiding treatments, e.g. by heating in the presence of hydrogen sulfide, to convert oxide forms of the metals such as CoO or NiO to their corresponding sulfides.

Examples 1 to 19 below illustrate the preparation of the crystalline catalytic material. In these examples, the sorption data for water, cyclohexane, benzene and/or n-hexane, they are Equilibrium Adsorption values determined as follows:

A weighed sample of the adsorbent, after calcination at 540°C for at least 1 hour and other treatment, if necessary, to remove any pore blocking contaminants, is contacted with the desired pure adsorbate vapor in an adsorption chamber. The increase in weight of the adsorbent is calculated as the adsorption capacity of the sample in terms of grams/100 grams adsorbent based on adsorbent weight after calcination at 540°C. The present composition exhibits an equilibrium benzene adsorption capacity at 6.7 kPa (50 torr) and 25°C of greater than 15 grams/100 grams, particularly greater than 17.5 g/100 g/ and more particularly greater than 20 g/100 g.

A preferred way to do this is to contact the desired pure adsorbate vapor in an adsorption chamber evacuated to less than 1 mm at conditions of 12 Torr of water vapor, 40 Torr of n-hexane or cyclohexane vapor, or 50 Torr of benzene vapor, at 25°C. The pressure is kept constant (within ± 0.5 mm) by addition of adsorbate vapor controlled by a manostat during the adsorption period. As adsorbate is adsorbed by the new crystal, the decrease in pressure causes the manostat to open a valve which admits more adsorbate vapor to the chamber to restore the above control pressures. Sorption is complete when the pressure change is not sufficient to activate the manostat.

Another way of doing this for benzene adsorption data is on a suitable thermogravimetric analysis system, such as a computer-controlled 990/951 duPont TGA system. The adsorbent sample is dehydrated (physically sorbed water removed) by heating at, for example, 350° or 500°C to constant weight in flowing helium. If the sample is in as-synthesized form, e.g. containing organic directing agents, it is calcined at 540°C in air and held to constant weight instead of the previously described 350° or 500°C treatment. Benzene adsorption isotherms are measured at 25°C by blending a benzene saturated helium gas stream with a pure helium gas stream in the proper proportions to obtain the desired benzene partial pressure. The value of the adsorption at 50 Torr of benzene is taken from a plot of the adsorption isotherm.

In the examples, percentages are by weight unless otherwise indicated.

Example 1

One hundred grams of cetyltrimethylammonium (CTMA) hydroxide solution, prepared by contacting a 29 wt % N,N,N-trimethyl-1-hexadecanaminium chloride solution with a hydroxide-for-halide exchange resin, was combined with 100 grams of an aqueous solution of tetramethylammonium (TMA) silicate (10% silica) with stirring. Twenty-five grams of HiSil, a precipitated hydrated silica containing 6 wt % free water and 4.5 wt % bound water of hydration and having an ultimate particle size of 0.02 micron, was added. The resulting mixture was placed in a polypropylene bottle, which was kept in a steam box at 95°C overnight. The mixture had a composition in terms of moles per mole $Al_2O_3$:

2.7 moles $Na_2O$
392 moles $SiO_2$
35.7 moles $(CTMA)_2O$
61.7 moles $(TMA)_2O$

6231 moles $H_2O$

The resulting solid product was recovered by filtration and dried in air at ambient temperature. The product was then calcined at 540°C for 1 hour in nitrogen, followed by 6 hours in air.

The calcined product proved to have a surface area of 475 $m^2/g$ and the following equilibrium adsorption capacities in grams/100 grams:

| | |
|---|---|
| $H_2O$ | 8.3 |
| Cyclohexane | 22.9 |
| n-Hexane | 18.2 |
| Benzene | 21.5 |

The product of this example may be characterized by X-ray diffractiion as including a very strong relative intensity line at 37.8 ± 2.0 Å d-spacing, and weak lines at 21.6 ± 1.0 and 19.2 ± 1.0 Å. Transmission electron microscopy (TEM) produced images of a hexagonal arrangement of uniform pores and hexagonal electron diffraction pattern with a $d_{100}$ value of 39 Å.

Example 2

One hundred grams of cetyltrimethylammonium (CTMA) hydroxide solution prepared as in Example 1 was combined with 100 grams of an aqueous solution of tetramethylammonium (TMA) hydroxide (25%) with stirring. Twenty-five grams of HiSil, a precipitated hydrated silica containing 6 wt % free water and 4.5 wt % bound water of hydration and having an ultimate particle size of 0.02 micron, was added. The resulting mixture was placed in a static autoclave at 150°C overnight. The mixture had a composition in terms of moles per mole $Al_2O_3$:

2.7 moles $Na_2O$
291 moles $SiO_2$
35.7 moles $(CTMA)_2O$
102 moles $(TMA)_2O$
6120 moles $H_2O$

The resulting solid product was recovered by filtration and dried in air at ambient temperature. The product was then calcined at 540°C for 1 hour in nitrogen, followed by 6 hours in air.

The calcined product proved to have a surface area of 993 $m^2/g$ and the following equilibrium adsorption capacities in grams/100 grams:

| | |
|---|---|
| $H_2O$ | 7.1 |
| Cyclohexane | 47.2 |
| n-Hexane | 36.2 |
| Benzene | 49.5 |

The X-ray diffraction pattern of the calcined product may be characterized as including a very strong relative intensity line at 39.3 ± 2.0 Å d-spacing, and weak lines at 22.2 ± 1.0 and 19.4 ± 1.0 Å. TEM indicated that the product contained the. ultra-large pore material.

A portion of the above product was then contacted with 100% steam at 1450°F for two hours. The surface area of the steamed material was measured to be 440 $m^2/g$, indicating that 45% was retained following severe steaming.

Another portion of the calcined product of this example was contacted with 100% steam at 1250°F for two hours. The surface area of this material was measured to be 718 $m^2/g$, indicating that 72% was retained after steaming at these conditions.

Example 3

Water, cetyltrimethylammonium hydroxide solution prepared as in Example 1, aluminum sulfate, HiSil and an aqueous solution of tetrapropylammonium (TPA) bromide (35%) were combined to produce a mixture having a composition in terms of moles per mole $Al_2O_3$:

0.65 moles $Na_2O$
65 moles $SiO_2$
8.8 moles $(CTMA)_2O$
1.22 moles $(TPA)_2O$
1336 moles $H_2O$

The resulting mixture was placed in a polypropylene bottle, which was kept in a steam box at 95°C for 192 hours. The sample was then cooled to room temperature and combined with CTMA hydroxide solution prepared as in Example 1 and TMA hydroxide (25% by weight) in the weight ratio of 3 parts mixture, 1 part CTMA hydroxide and 2 parts TMA hydroxide. The combined mixture was then placed in a polypropylene bottle and kept in a steam box at 95°C overnight. The combined mixture had a composition in terms of moles per mole $Al_2O_3$:

0.65 moles $Na_2O$
65 moles $SiO_2$
15 moles $(CTMA)_2O$
1.22 moles $(TPA)_2O$
35.6 moles $(TMA)_2O$
2927 moles $H_2O$

The resulting solid product was recovered by filtration and dried in air at ambient temperature. The product was then calcined at 540°C for 1 hour in nitrogen, followed by 6 hours in air.

The calcined product proved to have a surface area of 1085 $m^2/g$ and the following equilibrium adsorption capacities in grams/100 grams:

| | |
|---|---|
| $H_2O$ | 11.5 |
| Cyclohexane | > 50 |
| n-Hexane | 39.8 |
| Benzene | 62 |

The X-ray diffraction pattern of the calcined product of this example may be characterized as including a very strong relative intensity line at 38.2 ± 2.0 Å d-spacing, and weak lines at 22.2 ± 1.0 and 19.4 ± 1.0 Å. TEM indicated the product contained the ultra-large pore material.

Example 4

Two hundred grams of cetyltrimethylammonium (CTMA) hydroxide solution prepared as in Example 1 was combined with 2 grams of Catapal alumina (alpha-alumina monohydrate, 74% alumina) and 100 grams of an aqueous solution of tetramethylammonium (TMA) silicate (10% silica) with stirring. Twenty-five grams of HiSil, a precipitated hydrated silica containing 6 wt % free water and 4.5 wt % bound water of hydration and having an ultimate particle size of 0.02 micron, was added. The resulting mixture was placed in a static autoclave at 150°C for 48 hours. The mixture had a composition in terms of moles per mole $Al_2O_3$:

0.23 moles $Na_2O$
33.2 moles $SiO_2$
6.1 moles $(CTMA)_2O$
5.2 moles $(TMA)_2O$
780 moles $H_2O$

The resulting solid product was recovered by filtration and dried in air at ambient temperature. The product was then calcined at 540°C for 1 hour in nitrogen, followed by 6 hours in air.

The calcined product proved to have a surface area of 1043 $m^2/g$ and the following equilibrium adsorption capacities in grams/100 grams:

| | |
|---|---|
| $H_2O$ | 6.3 |
| Cyclohexane | > 50 |
| n-Hexane | 49.1 |

(continued)

| | |
|---|---|
| Benzene | 66.7 |

The X-ray diffraction pattern of the calcined product of this example may be characterized as including a very strong relative intensity line at 40.8 ± 2.0 Å d-spacing, and weak lines at 23.1 ± 1.0 and 20.1 ± 1.0 Å. TEM indicated that the product contained the ultra-large pore material.

Example 5

Two-hundred sixty grams of water was combined with 77 grams of phosphoric acid (85%), 46 grams of Catapal alumina (74% alumina), and 24 grams of pyrrolidine (Pyr) with stirring. This first mixture was placed in a stirred autoclave and heated to 150°C for six days. The material was filtered, washed and air-dried. Fifty grams of this product was slurried with 200 grams of water and 200 grams of cetyltrimethylammonium hydroxide solution prepared as in Example 1. Four hundred grams of an aqueous solution of tetraethylammonium silicate (10% silica) was then added to form a second mixture which was placed in a polypropylene bottle and kept in a steam box at 95°C overnight. The first mixture had a composition in terms of moles per mole $Al_2O_3$:

1.0 moles $P_2O_5$
1.51 moles $(Pyr)_2O$
47.2 moles $H_2O$

The resulting solid product was recovered by filtration and dried in air at ambient temperature. The product was then calcined at 540°C for 1 hour in nitrogen, followed by 6 hours in air.

The calcined product proved to have a surface area of 707 $m^2/g$ and the following equilibrium adsorption capacities in grams/100 grams:

| | |
|---|---|
| $H_2O$ | 33.2 |
| Cyclohexane | 19.7 |
| n-Hexane | 20.1 |
| Benzene | 23.3 |

The X-ray diffraction pattern of the calcined product may be characterized as including a very strong relative intensity line at 25.4 ± 1.5 Å d-spacing. TEM indicated the product contained the present ultra-large pore material (see Example 23).

Example 6

A solution of 1.35 grams of $NaAlO_2$ (43.5% $Al_2O_3$, 30% $Na_2O$) dissolved in 45.2 grams of water was mixed with 17.3 grams of NaOH, 125.3 grams of colloidal silica (40%, Ludox HS-40) and 42.6 grams of 40% aqueous solution of tetraethylammonium (TEA) hydroxide. After stirring overnight, the mixture was heated for 7 days in a steam box (95°C). Following filtration, 151 grams of this solution was mixed with 31 grams of cetyltrimethylammonium hydroxide solution prepared as in Example 1 and stored in the steam box at 95°C for 13 days. The mixture had the following relative molar composition:

0.25 moles $Al_2O_3$
10 moles $Na_2O$
36 moles $SiO_2$
0.95 moles $(CTMA)_2O$
2.5 moles $(TEA)_2O$
445 moles $H_2O$

The resulting solid product was recovered by filtration and washed with water and ethanol. The product was then calcined at 540°C for 1 hour in nitrogen, followed by 6 hours in air.

The calcined product composition included 0.14 wt % Na, 68.5 wt % $SiO_2$ and 5.1 wt % $Al_2O_3$, and proved to have a benzene equilibrium adsorption capacity of 58.6 grams/100 grams.

The X-ray diffraction pattern of the calcined product may be characterized as including a very strong relative

intensity line at 31.4 ± 1.5 Å d-spacing. TEM indicated that the product contained the present ultra-large pore material.

Example 7

A mixture of 300 grams of cetyltrimethylammonium (CTMA) hydroxide solution prepared as in Example 1 and 41 grams of colloidal silica (40%, Ludox HS-40) was heated in a 600 cc autoclave at 150°C for 48 hours with stirring at 200 rpm. The mixture has a composition in terms of moles per mole $SiO_2$:

0.5 mole $(CTMA)_2O$
46.5 moles $H_2O$

The resulting solid product was recovered by filtration, washed with water, then calcined at 540°C for 1 hour in nitrogen, followed by 10 hours in air.

The calcined product composition included less than 0.01 wt % Na, 98.7 wt % $SiO_2$ and 0.01 wt % $Al_2O_3$, and proved to have a surface area of 896 $m^2/g$. The calcined product had the following equilibrium adsorption capacities in grams/100 grams:

| | |
|---|---|
| $H_2O$ | 8.4 |
| Cyclohexane | 49.8 |
| n-Hexane | 42.3 |
| Benzene | 55.7 |

The X-ray diffraction pattern of the calcined product of this example may be characterized as including a very strong relative intensity line at 40.0 ± 2.0 Å d-spacing and a weak line at 21.2 ± 1.0 Å. TEM indicated that the product of this example contained at least three separate phases, one of which was the ultra-large pore material.

Example 8

A mixture of 150 grams of cetyltrimethylammonium (CTMA) hydroxide solution prepared as in Example 1 and 21 grams of colloidal silica (40%, Ludox HS-40) with an initial pH of 12.64 was heated in a 300 cc autoclave at 150°C for 48 hours with stirring at 200 rpm. The mixture had a composition in terms of moles per mole $SiO_2$:

0.5 mole $(CTMA)_2O$
46.5 moles $H_2O$

The resulting solid product was recovered by filtration, washed with water, then calcined at 540°C for 6 hours in air.

The calcined product composition was measured to include 0.01 wt % Na, 93.2 wt % $SiO_2$ and 0.016 wt % $Al_2O_3$, and proved to have a surface area of 992 $m^2/g$ and the following equilibrium adsorption capacities in grams/100 grams:

| | |
|---|---|
| $H_2O$ | 4.6 |
| Cyclohexane | > 50 |
| n-Hexane | > 50 |
| Benzene | 62.7 |

The X-ray diffraction pattern of the calcined product may be characterized as including a very strong relative intensity line at 43.6 ± 2.0 Å d-spacing and weak lines at 25.1 ± 1.5 and 21.7 ± 1.0 Å. TEM indicated that the product contained the ultra-large pore material.

Example 9

Sodium aluminate (4.15g) was added slowly into a solution containing 16g of myristyltrimethylammonium bromide ($C_{14}$TMABr) in 100g of water. Tetramethylammonium silicate (100g-10% $SiO_2$), HiSil (25g) and tetramethylammonium hydroxide (14.2g-25% solution) were then added to the mixture. The mixture was crystallized in an autoclave at 120°C with stirring for 24 hours.

The product was filtered, washed and air dried. Elemental analysis showed the product contained 53.3 wt % $SiO_2$, 3.2 wt % $Al_2O_3$, 15.0 wt % C, 1.88 wt % N, 0.11 wt % Na and 53.5 wt % ash at 1000°C. The X-ray diffraction pattern of the material after calcination at 540°C for 1 hour in $N_2$ and 6 hours in air includes a very strong relative intensity line at 35.3 ± 2.0 Å d-spacing and weak lines at 20.4 ± 1.0 and 17.7 ± 1.0 Å d-spacing. TEM indicated that the product contained the ultra-large pore material.

The washed product, having been exchanged with 1N ammonium nitrate solution at room temperature, then calcined, proved to have a surface area of 827 $m^2/g$ and the following equilibrium adsorption capacities in g/100g anhydrous sorbent:

| | |
|---|---|
| $H_2O$ | 30.8 |
| Cyclohexane | 33.0 |
| n-Hexane | 27.9 |
| Benzene | 40.7 |

Example 10

Sodium aluminum (8.3g) was added slowly into a solution containing 184g of dodecyltrimethylammonium hydroxide ($C_{12}$TMAOH, 50%) solution diluted with 480g of water. UltraSil (50g) and an aqueous solution of tetramethylammonium silicate (200g-10% $SiO_2$) and tetramethylammonium hydroxide (26.38g-25% solution) were then added to the mixture. The mixture was crystallized in an autoclave at 100°C with stirring for 24 hours.

The product was filtered, washed and air dried. After calcination at 540°C for 1 hour in $N_2$ and 6 hours in air, the X-ray diffraction pattern includes a very strong relative intensity line at 30.4 ± 1.5 Å d-spacing and weak lines at 17.7 ± 1.0 and 15.3 ± 1.0 Å d-spacing. TEM indicated that the product contained the ultra-large pore material.

The washed product, having been exchanged with 1N ammonium nitrate solution at room temperature, then calcined, proved to have a surface area of 1078 $m^2/g$ and the following equilibrium adsorption capacities in g/100g anhydrous sorbent:

| | |
|---|---|
| $H_2O$ | 32.6 |
| Cyclohexane | 38.1 |
| n-Hexane | 33.3 |
| Benzene | 42.9 |

Example 11

A solution of 4.9 grams of $NaAlO_2$ (43.5 % $Al_2O_3$, 30% $NaO_2$) in 37.5 grams of water was mixed with 46.3 ml of 40% aqueous tetraethylammonium hydroxide solution and 96 grams of colloidal silica (40%, Ludox HS-40). The gel was stirred vigorously for 0.5 hour, mixed with an equal volume (150 ml) of cetyltrimethylammonium hydroxide solution prepared as in Example 1 and reacted at 100°C for 168 hours. The mixture had the following composition in terms of moles per mole $Al_2O_3$:

1.1 moles $Na_2O$
30.6 moles $SiO_2$
3.0 moles $(TEA)_2O$
3.25 moles $(CTMA)_2O$
609 moles $H_2O$

The resulting solid product was recovered by filtration, washed with water then calcined at 540°C for 16 hours in air. The calcined product proved to have a surface area of 1352 $m^2/g$ and the following equilibrium adsorption capacities in grams/100 grams:

| | |
|---|---|
| $H_2O$ | 23.6 |
| Cyclohexane | >50 |
| n-Hexane | 49 |
| Benzene | 67.5 |

The X-ray diffraction pattern of the calcined product may be characterized as including a very strong relative

intensity line at 38.5 ± 2.0 Å d-spacing and a weak line at 20.3 ± 1.0 Å. TEM indicated that the product contained the ultra-large pore material.

Example 12

Two hundred grams of cetyltrimethylammonium (CTMA) hydroxide solution prepared as in Example 1 was combined with 4.15 grams of sodium aluminate and 100 grams of aqueous tetramethylammonium (TMA) silicate solution (10% silica) with stirring. Twenty-five grams of HiSil, a precipitated hydrated silica containing 6 wt % free water and 4.5 wt % bound water of hydration and having an ultimate particle size of 0.02 micron, was added. The resulting mixture was placed in a static autoclave at 150°C for 24 hours. The mixture had a composition in terms of moles per mole $Al_2O_3$:

1.25 moles $Na_2O$
27.8 moles $SiO_2$
5.1 moles $(CTMA)_2O$
4.40 moles $(TMA)_2O$
650 moles $H_2O$

The resulting solid product was recovered by filtration and dried in air at ambient temperature. The product was then calcined at 540°C for 1 hour in nitrogen, followed by 6 hours in air. TEM indicated that this product contained the ultra-large pore material. The X-ray diffraction pattern of the calcined product of this example can be characterized as including a very strong relative intensity line at 44.2 ± 2.0 Å d-spacing and weak lines at 25.2 ± 1.5 and 22.0 ± 1.0 Å.

The calcined product proved to have a surface area of 932 $m^2/g$ and the following equilibrium adsorption capacities in grams/100 grams:

| | |
|---|---|
| $H_2O$ | 39.3 |
| Cyclohexane | 46.6 |
| n-Hexane | 37.5 |
| Benzene | 50 |

Example 13

Two hundred grams of cetyltrimethylammonium (CTMA) hydroxide solution prepared as in Example 1 was combined with 4.15 grams of sodium aluminate and 100 grams of aqueous tetramethylammonium (TMA) silicate solution (10% silica) with stirring. Twenty-five grams of HiSil, a precipitated hydrated silica containing 6 wt % free water and 4.5 wt % bound water of hydration and having an ultimate particle size of 0.02 micron, was added. The resulting mixture was placed in a steam box at 100°C for 48 hours. The mixture had a composition in terms of moles per mole $Al_2O_3$:

1.25 moles $Na_2O$
27.8 moles $SiO_2$
5.1 moles $(CTMA)_2O$
4.4 moles $(TMA)_2O$
650 moles $H_2O$

The resulting solid product was recovered by filtration and dried in air at ambient temperature. The product was then calcined at 540°C for 1 hour in nitrogen, followed by 6 hours in air. The calcined product proved to have the following equilibrium adsorption capacities in grams/100 grams:

| | |
|---|---|
| $H_2O$ | 35.2 |
| Cyclohexane | > 50 |
| n-Hexane | 40.8 |
| Benzene | 53.5 |

The X-ray diffraction pattern of the calcined product may be characterized as including a very strong relative intensity line at 39.1 ± 2.0 Å d-spacing and weak lines at 22.4 ± 1.0 and 19.4 ± 1.0 Å. TEM indicated that this product

contained the ultra-large pore material.

Example 14

A mixture of 125 grams of 29% CTMA chloride aqueous solution, 200 grams of water, 3 grams of sodium aluminate (in 50 grams $H_2O$), 65 grams of Ultrasil, amorphous precipitated silica available from PQ Corporation, and 21 grams NaOH (in 50 grams $H_2O$) was stirred thoroughly and crystallized at 150°C for 168 hours. The reaction mixture had the following relative molar composition in terms of moles per mole silica:

0.10 moles $(CTMA)_2O$
21.89 moles $H_2O$
0.036 moles $NaAlO_2$
0.53 moles NaOH

The solid product was isolated by filtration, washed with water, dried for 16 hours at room temperature and calcined at 540°C for 10 hours in air. The calcined product proved to have a surface area of 840 $m^2/g$, and the following equilibrium adsorption capacities in grams/100 grams:

| | |
|---|---|
| $H_2O$ | 15.2 |
| Cyclohexane | 42.0 |
| n-Hexane | 26.5 |
| Benzene | 62 |

The X-ray diffraction pattern of the calcined product may be characterized as including a very strong relative intensity line at 40.5 ± 2.0 Å d-spacing. TEM indicated that the product contained the ultra-large pore material.

Example 15

To make the primary template mixture for this example, 240 grams of water was added to a 92 gram solution of 50% dodecyltrimethylammonium hydroxide, 36% isopropyl alcohol and 14% water such that the mole ratio of Solvent/$R_{2/f}O$ was 155. The mole ratio of $H_2O/R_{2/f}O$ in this mixture was 149 and the IPA/$R_{2/f}O$ mole ratio was 6. To the primary template mixture was added 4.15 grams of sodium aluminate, 25 grams of HiSil, 100 grams of aqueous tetramethylammonium silicate solution (10% $SiO_2$) and 13.2 grams of 25% aqueous tetramethylammonium hydroxide solution. The mole ratio of $R_{2/f}O/(SiO_2+Al_2O_3)$ was 0.28 for the mixture.

This mixture was stirred at 25°C for 1 hour. The resulting mixture was then placed in an autoclave at 100°C and stirred at 100 rpm for 24 hours. The mixture in the autoclave had the following relative molar composition in terms of moles per mole $SiO_2$:

0.05 mole $Na_2O$
0.036 mole $Al_2O_3$
0.18 mole $(C_{12}TMA)_2O$
0.12 mole $(TMA)_2O$
36.0 moles $H_2O$
1.0 mole IPA

The resulting solid product was recovered by filtration, washed with water and dried in air at ambient temperature. The product was then calcined at 540°C for 1 hour in nitrogen, followed by 6 hours in air.

The calcined product proved to have a surface area of 1223 $m^2/g$ and the following equilibrium adsorption capacities in grams/100 grams:

| | |
|---|---|
| $H_2O$ | 25.5 |
| Cyclohexane | 41.1 |
| n-Hexane | 35.1 |
| Benzene | 51 |

The X-ray diffraction pattern of the calcined product may be characterized as including a very strong relative

intensity line at 30.8 ± 1.5 Å d-spacing and weak lines at 17.9 ± 1.0 and 15.5 ± 1.0 Å. TEM indicated this product to contain the ultra-large pore material.

Example 16

A 50.75 gram quantity of decyltrimethylammonium hydroxide (prepared by contacting a ca. 29 wt % solution of decyltrimethylammonium bromide with a hydroxide-for-halide exchange resin) was combined with 8.75 grams of tetraethylorthosilicate. The mixture was stirred for 1 hour and then transferred to a polypropylene jar which was then placed in a steambox for 24 hours. The mixture had a composition in terms of moles per mole $SiO_2$:

0.81 mole $(C_{10}TMA)_2O$
47.6 moles $H_2O$

The resulting solid product was filtered and washed several times with warm (60°-70°C) distilled water and with acetone. The final product was calcined to 538°C in $N_2$/air mixture and then held in air for 8 hours. The calcined product proved to have a surface area of 915 $m^2/g$ and an equilibrium benzene adsorption capacity of 35 grams/100 grams. Argon physisorption data indicated an argon uptake of 0.34 cc/gram, and a pore size of 15 Å.

The X-ray diffraction pattern of the calcined product of this example may be characterized as including a very strong relative intensity line at 27.5 ± 1.5 Å d-spacing and weak lines at 15.8 ± 1.0 and 13.7 ± 1.0 Å. TEM indicated that the product of this example contained the ultra-large pore material.

Example 17

To eighty grams of cetyltrimethylammonium hydroxide (CTMAOH) solution prepared as in Example 1 was added 1.65 grams of $NaAlO_2$. The mixture was stirred at room temperature until the $NaAlO_2$ was dissolved. To this solution was added 40 grams of aqueous tetramethylammonium (TMA) silicate solution (10 wt % $SiO_2$), 10 grams of HiSil, 200 grams of water and 70 grams of 1,3,5-trimethylbenzene (mesitylene). The resulting mixture was stirred at room temperature for several minutes. The gel was then loaded into a 600 cc autoclave and heated at 105°C for sixty-eight hours with stirring at 150 rpm. The mixture had a composition in terms of moles per mole $Al_2O_3$:

1.25 moles $Na_2O$
27.8 moles $SiO_2$
5.1 moles $(CTMA)_2O$
2.24 moles $(TMA)_2O$
2256 moles $H_2O$
80.53 moles 1,3,5-trimethylbenzene

The resulting product was filtered and washed several times with warm (60°-70°C) distilled water and with acetone. The final product was calcined to 538°C in $N_2$/air mixture and then held in air for 10 hours. The calcined product proved to have an equilbrium benzene adsorption capacity of >25 grams/100 grams.

The X-ray diffraction pattern of the calcined product may be characterized as including a broad, very strong relative intensity line at 102 Å d-spacing, but accurate positions of lines in the extreme low angle region of the X-ray diffraction pattern are very difficult to determine with conventional X-ray diffractometers. Furthermore, finer collimating slits were required to resolve a peak at this low 2-theta angle. The slits used in this example, starting at the X-ray tube, were 0.1, 0.3, 0.5 and 0.2 mm, respectively. TEM indicated that the product of this example contained several materials with different $d_{100}$ values as observed in their electron diffraction patterns. These materials were found to possess $d_{100}$ values between 85 Å d-spacing and 120 Å d-spacing.

Example 18

To eighty grams of cetyltrimethylammonium hydroxide (CTMAOH) solution prepared as in Example 1 was added 1.65 grams of $NaAlO_2$. The mixture was stirred at room temperature until the $NaAlO_2$ was dissolved. To this solution was added 40 grams of aqueous tetramethylammonium (TMA) silicate solution (10 wt % $SiO_2$), 10 grams of HiSil, 200 grams of water and 120 grams of 1,3,5-trimethylbenzene (mesitylene). The resulting mixture was stirred at room temperature for several minutes. The gel was then loaded into a 600 ml autoclave and heated at 105°C for ninety hours with stirring at 150 rpm. The mixture had a composition in terms of moles per mole $Al_2O_3$:

1.25 moles $Na_2O$

27.8 moles $SiO_2$
5.1 moles $(CTMA)_2O$
2.24 moles $(TMA)_2O$
2256 moles $H_2O$
132.7 moles 1,3,5-trimethylbenzene

The resulting product was filtered and washed several times with warm (60°-70°C) distilled water and with acetone. The final product was calcined to 538°C in $N_2$/air mixture and then held in air for 10 hours. The calcined product proved to have a surface area of 915 $m^2$/g and an equilbrium benzene adsorption capacity of >25 grams/100 grams. Argon physisorption data indicated an argon uptake of 0.95 cc/gram, and a pore size centered on 78 Å (Dollimore-Heal Method, see Example 19(b)), but running from 70 to greater than 105 Å. The X-ray diffraction pattern of the calcined product of this example may be characterized as having only enhanced scattered intensity in the very low angle region of the X-ray diffraction, where intensity from the transmitted incident X-ray beam is usually observed. However, TEM indicated that the product contained several materials with different $d_{100}$ values as observed in their electron diffraction patterns. These materials were found to possess $d_{100}$ values between 85 Å d-spacing and 110 Å d-spacing.

Example 19

To eighty grams of cetyltrimethylammonium hydroxide (CTMAOH) solution prepared as in Example 1 was added 1.65 grams of $NaAlO_2$. The mixture was stirred at room temperature until the $NaAlO_2$ was dissolved. To this solution was added 40 grams of aqueous tetramethylammonium (TMA) silicate solution (10 wt % $SiO_2$), 10 grams of HiSil, and 18 grams of 1,3,5-trimethylbenzene (mesitylene). The resulting mixture was stirred at room temperature for several minutes. The gel was then loaded into a 300 cc autoclave and heated at 105°C for four hours with stirring at 150 rpm. The mixture had a composition in terms of moles per mole $Al_2O_3$:

1.25 moles $Na_2O$
27.8 moles $SiO_2$
5.1 moles $(CTMA)_2O$
2.24 moles $(TMA)_2O$
650 moles $H_2O$
19.9 moles 1,3,5-trimethylbenzene

The resulting product was filtered and washed several times with warm (60°-70°C) distilled water and with acetone. The final product was calcined to 538°C in $N_2$/air mixture and then held in air for 8 hours.

The calcined product proved to have a surface area of 975 $m^2$/g and an equilbrium benzene adsorption capacity of >40 grams/100 grams. Argon physisorption data indicated an argon uptake of 0.97 cc/gram, and a pore size of 63 Å (Dollimore-Heal Method), with the peak occurring at $P/P_{o=}0.65$.

The X-ray diffraction pattern of the calcined product of this example may be characterized as including a very strong relative intensity line at 63 ± 5 Å d-spacing and weak lines at 36.4 ± 2.0, 31.3 ± 1.5 Å and 23.8 ± 1.0 Å d-spacing. TEM indicated that the product of this example contained the ultra-large pore material.

Example 20

Argon Physisorption Determination

To determine the pore diameters of the mesoporous products with pores up to 60 Å in diameter, 0.2 gram samples of the products of Examples 1 through 17 were placed in glass sample tubes and attached to a physisorption apparatus as described in U.S. Patent No. 4,762,010.

The samples were heated to 300°C for 3 hours in vacuo to remove adsorbed water. Thereafter, the samples were cooled to 87°K by immersion of the sample tubes in liquid argon. Metered amounts of gaseous argon were then admitted to the samples in stepwise manner as described in U.S. Patent No. 4,762,010, column 20. From the amount of argon admitted to the samples and the amount of argon left in the gas space above the samples, the amount of argon adsorbed can be calculated. For this calculation, the ideal gas law and the calibrated sample volumes were used. (See also S.J. Gregg et al., Adsorption, Surface Area and Porosity, 2nd ed., Academic Press, 1982). In each instance, a graph of the amount adsorbed versus the relative pressure above the sample, at equilibrium, constitutes the adsorption isotherm. It is common to use relative pressures which are obtained by forming the ratio of the equilibrium pressure and the vapor pressure $P_o$ of the adsorbate at the temperature where the isotherm is measured. Sufficiently

small amounts of argon were admitted in each step to generate 168 data points in the relative pressure range from 0 to 0.6. At least 100 points are required to define the isotherm with sufficient detail.

The step (inflection) in the isotherm, indicates filling of a pore system. The size of the step indicates the amount adsorbed, whereas the position of the step in terms of $P/P_o$ reflects the size of the pores in which the adsorption takes place. Larger pores are filled at higher $P/P_o$. In order to better locate the position of the step in the isotherm, the derivative with respect to log $(P/P_o)$ is formed. The adsorption peak (stated in terms of log $(P/P_o)$) may be related to the physical pore diameter (Å) by the following formula:

$$\log(P/P_o) = \frac{K}{d-0.38}\left[\frac{S^4}{3(L-D/2)^3} - \frac{S^{10}}{9(L-D/2)^9} - \frac{S^4}{3(D/2)^3} + \frac{S^{10}}{9(D/2)^9}\right]$$

where d = pore diameter in nanometers, K = 32.17, S = 0.2446, L = d ± 0.19, and D = 0.57.

This formula is derived from the method of Horvath and Kawazoe (G. Horvath et al., J. Chem. Eng. Japan, 16 (6) 470(1983)). The constants required for the implementation of this formula were determined from a measured isotherm of ALPO-5 and its known pore size. This method is particularly useful for microporous materials having pores of up to 60 Å in diameter.

The results of this procedure for the samples from Examples 1 through 16 are tabulated below. The samples from Examples 10, 13 and 15 gave two separate peaks, believed to be the result of two separate ultra-large pore phases in the products.

| Examples | Pore Diameter, Å |
|---|---|
| 1 | 32.2 |
| 2 | 35.4 |
| 3 | 42.5 |
| 4 | 39.6 |
| 5 | 16.9 |
| 6 | 27.3 |
| 7 | 36.6 |
| 8 | 42.6 |
| 9 | 28.3 |
| 10 | 22.8, 30.8 |
| 11 | 36.8 |
| 12 | 36.1 |
| 13 | 35.0, 42.1 |
| 14 | 40.0 |
| 15 | 22.4, 30.4 |
| 16 | 15.0 |

By way of comparison, a commercially prepared sample of zeolite USY (equilibrium benzene sorption capacity of 20.7 grams/100 grams, X-ray diffraction pattern with all the lines of zeolite Y and with the highest d-spacing at 14 Å) had a pore diameter of 8.3 Å as determined by the above method.

The method of Horvath and Kawazoe for determining pore size from physisorption isotherms was intended to be applied to pore systems of up to 20 Å diameter; but with some care as above detailed, its use can be extended to pores of up to 60 Å diameter.

In the pore regime above 60 Å diameter, the Kelvin equation can be applied. It is usually given as:

$$\ln(P/P_o) = \frac{-2\gamma V}{r_k RT}\cos\theta$$

where:

- $\gamma$ = surface tension of sorbate
- V = molar volume of sorbate
- $\theta$ = contact angle (usually taken for practical reasons to be 0)
- R = gas constant
- T = absolute temperature
- $r_k$ = capillary condensate (pore) radius
- $P/P_o$ = relative pressure (taken from the physisorption isotherm)

The Kelvin equation treats adsorption in pore systems as a capillary condensation phenomenon and relates the pressure at which adsorption takes place to the pore diameter through the surface tension and contact angle of the adsorbate (in this case, argon). The principles upon which the Kelvin equation are based are valid for pores in the size range 50 to 1000 Angstrom diameter. Below this range the equation no longer reflects physical reality, since true capillary condensation cannot occur in smaller pores; above this range the logarithmic nature of the equation precludes obtaining sufficient accuracy for pore size determination.

The particular implementation of the Kelvin equation often chosen for measurement of pore size is that reported by Dollimore and Heal (D. Dollimore and G.R. Heal, J. Applied Chem, 14, 108 (1964)). This method corrects for the effects of the surface layer of adsorbate on the pore wall, of which the Kelvin equation proper does not take account, and thus provides a more accurate measurement of pore diameter. While the method of Dollimore and Heal was derived for use on desorption isotherms, it can be applied equally well to adsorption isotherms by simply inverting the data set.

Transmission Electron Microscopy

In order to illuminate the microstructure of materials by transmission electromicroscopy (TEM), samples must be thin enough for an electron beam to pass through them, generally 500-1000 Å or so thick. The crystal morphology of the present materials usually required that they be prepared for study by ultramicrotomy. While time consuming, this technique of sample preparation is quite familiar to those skilled in the art of electron microscopy. The materials are embedded in a resin, in this case a commercially available low viscosity acrylic resin L.R. WHITE (hard), which is then cured at 80°C for 1 1/2 hours. Thin sections of the block are cut on an ultramicrotome using a diamond knife and sections in the thickness range 500-1000 Å are collected on fine mesh electron microscope support grids. For these materials, an LKB model microtome with a 45°C diamond knife edge was used; the support grids were 400 mesh copper grids. After evaporation of a thin carbon coating on the sample to prevent charging in the microscope (light gray color on a white sheet of paper next to the sample in the evaporator), the samples are ready for examination in the TEM.

High resolution TEM micrographs show projections of structure along the direction that the sample is viewed. For this reason, it is necessary to have a sample in specific orientations to see certain details of the microstructure of the material. For crystalline materials, these orientations are most easily chosen by observing the electron diffraction pattern (EDP) that is produced simultaneously with the electron microscope image. Such EDPs are readily produced on modern TEM instruments using, e.g. the selected area field limiting aperture technique familiar to those skilled in the art of electron microscopy. When an EDP with the desired arrangement of diffraction spots is observed, the corresponding image of the crystal giving that EDP will reveal details of the microstructure along the direction of projection indicated by the EDP. In this way, different projections of a crystal's structure can be observed and identified using TEM.

In order to observe the salient features of the crystalline product, it is necessary to view the material in an orientation wherein the corresponding EDP gives a hexagonal arrangement of diffraction spots from a single individual crystal. If multiple crystals are present within the field limiting aperture, overlapping diffraction patterns will occur that can be quite difficult to interpret. The number of diffraction spots observed depends to a degree upon the regularity of the crystalline arrangement in the material, among other things. At the very least the inner ring of bright spots should be observed to obtain a good image. Individual crystals can be manipulated by specimen tilt adjustments on the TEM until this orientation is achieved. More often, it is easier to take advantage of the fact that the specimen contains many randomly oriented crystals and to simply search through the sample until a crystal giving the desired EDP (and hence orientation) is located. This latter technique was used to produce the electron micrographs.

Microtomed samples of materials from the Examples were examined by the techniques described above in

a JEOL 200 CX transmission electron microscope operated at 200,000 volts with an effective 2 Å objective aperture in place. The instrument has a point-to-point resolution of 4.5 Å. Other experimental arrangements familiar to one skilled in the art of high resolution (phase contrast) TEM could be used to produce equivalent images provided care is taken to keep the objective lens on the underfocus (weak leans) side of the minimum contrast lens current setting.

Example 21

This example illustrates the use of an amorphous hydrocracking catalyst and provides a base case for comparison.

A heavy vacuum gas oil from a Persian Gulf crude was processed at 8400 kPa abs (1200 psig) hydrogen pressure, 800 n.l.l.$^{-1}$ (4500 SCFB) hydrogen circulation and 0.5 LHSV over an amorphous cascaded catalyst system consisting of DHC-2 followed by DHC-6. Both catalysts are manufactured by UOP. The VGO properties are listed in Table 1 below.

Table 1

| Properties of Persian Gulf VGO | |
|---|---|
| Hydrogen, wt % | 12.6 |
| Nitrogen, ppm | 650 |
| Basic Nitrogen, ppm | 198 |
| Sulfur, wt % | 2.3 |
| API Gravity | 22.6 |
| Pour Point, °C (°F) | 32 (90) |
| Composition, wt % | |
| Paraffins | 27.7 |
| Mononaphthenes | 8.3 |
| Polynaphthenes | 14.6 |
| Aromatics | 49.4 |
| Simulated Dist., wt % | |
| IBP, °C (°F) | 277 (531) |
| 5 | 364 (687) |
| 10 | 379 (715) |
| 20 | 396 (745) |
| 30 | 410 (770) |
| 40 | 423 (793) |
| 50 | 436 (816) |
| 60 | 449 (841) |
| 70 | 463 (866) |
| 80 | 481 (897) |
| 90 | 506 (942) |
| 95 | 521 (970) |
| EP | 577 (1071) |

The heavy vacuum gas oil feed was processed at 8380 kPa abs (1200 psig) hydrogen pressure, 800 n.l.l.$^{-1}$ (4500 scf/bbl) hydrogen circulation, and 0.5 LHSV over amorphous catalyst system consisting of DHC-2/DHC-6 catalysts (UOP).

The DHC-2 catalyst serves as a hydrotreating catalyst to reduce nitrogen and sulfur content before the oil is processed in the hydrocracking section of the reactor containing the DHC6 catalyst. The DHC-6 catalyst does the bulk of the boiling range conversion. The catalyst fill ratio was 38.4 g of DHC-2 and 60.3 g of DHC-6 to give a HDT/HDC weight ratio of 0.64 with a total catalyst volume of 150 ml.

The reactor severity is measured by 650°F- boiling range conversion which is defined as:

$$650°F\text{- conversion} = \frac{650°F+ \text{ in Feed (wt \%)} - 650°F+ \text{ in Product (wt \%)}}{650°F+ \text{ in Feed (wt \%)}}$$

The reactor severity was varied by adjusting reactor temperature in the range 371°-399°C (700°-750°F) at constant LHSV. The temperatures of the hydrotreating and hydrocracking reactors were maintained at the same temperature for all runs. The results of these runs are summarized graphically in Figures 1 and 2 of the drawings, as discussed below.

Example 22

A sample of MCM-41 (40 Å) was prepared in accordance with the method described below.
The following mixture was charged to an autoclave:

| | |
|---|---|
| 9965g | Cetyltrimethylammonium (CTMA) hydroxide, prepared by contacting a 29 wt % N,N,N-trimethyl-1-hexadecylammonium chloride solution with a hydroxide-for-halide exchange resin, |
| 208g | Sodium aluminate, |
| 492g | Tetramethylammonim silicate (10% aqueous solution), |
| 1245g | Precipitated hydrated silica (HiSil ♦). |

The mixture was crystallized at 100°C for 20 hrs. with srirring under autogeneous pressure. The resulting product was recovered by filtration and dried in air at ambient temperature. A sample of the product was calcined at 540° C for 1 hour in nitrogen, followed by 6 hours in air for characterization.
The calcined product had a surface area of 1120 $m^2/g$ and the following equilibrium absorption capacities in grams/100 grams:

| | |
|---|---|
| $H_2O$ | 10.8 |
| Cyclohexane | >50 |
| n-hexane | >50 |
| Benzene | 67 |

The product was identified as MCM-41 with an X-ray diffraction pattern which included a very strong relative intensity line at 38.4 ± 2.0 Å d-spacing, and weak lines at 22.6 ± 1.0, 20.0 ± 1.0, and 15.2 +1.0 Å.
The MCM-41 crystalline product was exchanged with room temperature aqueous solutions of ammonium nitrate and subsequently dried overnight at 121°C (250°F). A portion of the resultant crystals was combined with $Al_2O_3$ to form a mixture of 65 parts, by weight MCM-41 and 35 parts alumina. Water was added to this mixture to allow the resulting catalyst to be formed into extrudates. The catalyst was activated by calcination at 510°C (950°F) in 5v/v/min of nitrogen for 6 hours followed by the replacement of the nitrogen with 5v/v/min of air. The calcination was completed by raising the temperature to 538°C (1000°F) and maintaining that temperature in 5v/v/min air for 18 hours. Nickel and tungsten were incorporated via incipient wetness coimpregnation using solutions of $Ni(NO_3)_2.6H_2O$ and $(NH_4)_6H_2W_{12O}40.H_2O$. After drying overnight at 121°C (250°F), the extrudate was calcined in 5v/v/min air at 538°C (1000°F) for 3 hours. Physical and chemical properties of the NiW/MCM-41/$Al_2O_3$ catalyst are provided below:

| | |
|---|---|
| Nickel, wt % | 3.7 |
| Tungsten, wt % | 9.2 |
| Sodium, ppm | 200 |
| Surface Area, $m^2/g$ | 530 |
| Pore Volume, cc/g | 0.780 |
| Particle Density, g/cc | 0.883 |
| Real Density, g/cc | 2.837 |

Example 23

The catalyst of Example 22 was used as the hydrocracking catalyst in a DHC2/NiW MCM-41 cascade MPHC

reactor system. The catalyst fill ratio was 4.08g of DHC-2 and 6.40g of NiW-MCM-41 to give the same HDT/HDC weight ratio of 0.64 as in Example 21, with a total catalyst volume of 20.2cc. The feed and process conditions of Example 21 were used. Severity was varied by adjusting reactor temperature from 382°-410°C (720°-770°F). The results of these runs are summarized graphically in Figures 1 and 2.

An activity comparison between Examples 21 and 23 is shown in Figure 1. It can be seen that conversion activities are similar and within 5.6°C (10°F) for both catalyst systems.

Figure 2 shows the 343°C- (650°F-) product selectivities as a function of 343°C- (650°F-) boiling range conversion for the results of Examples 21 and 23. The data show that the selectivities for kerosene 166°-227°C (330°-440°F fraction) and distillate 227°-343°C (440°-650°F fraction) are almost identical for the MCM-41 catalyst system as compared to the base case amorphous DHC6 catalyst. These results are also shown in tabular form for a conversion level of 45 wt %, in Table 4 below:

Table 4

| MPHC of VGO BLEND (45 wt% Conversion) | | |
|---|---|---|
| Catalyst | DHC-2/DHC-6 | DHC-2/NiW-MCM-41 |
| Reactor Temp.,°C (°F) | 396 (745) | 401 (753) |
| Product Composition,wt % | | |
| C1-C4 | 2.6 | 4.0 |
| C5-330 | 11 | 10.5 |
| 330-440 | 9.5 | 9.0 |
| 440-650 | 22.5 | 22.5 |
| 650-750 | 18 | 18 |
| 750+ | 35 | 35 |
| H2 Cons, n.l.l.$^{-1}$ (SCFB) | 124-133 (700-750) | 151 (850) |

These results once again show that an ultra-large pore molecular sieve can produce kerosene and distillate yields comparable to an amorphous catalyst system.

<u>Example 24</u>

The Total Liquid Product (TLP) samples of Examples 21 and 23 at the same 43 wt % conversion were distilled to yield 730°F+ bottoms material that were subsequently analyzed. Table 5 contains the results of this comparison.

TABLE 5

| Bottoms Properties at 43 wt% 650°F+ Conversion | | |
|---|---|---|
| 730°F+ Properties | Example 22 | Example 24 |
| Nitrogen, ppm | 15 | 3 |
| Mol. Weight | 406 | 388 |
| Pour Point, °C (°F) | 35 (95) | 32(90) |
| KV @ 100°C, $mm^2/s$ | 5.019 | 4.804 |
| Composition, wt % | | |
| Paraffins | 44.5 | 43.3 |
| Mononaphthenes | 15.7 | 19.3 |
| Polynaphthenes | 20.2 | 23.4 |
| Aromatics | 19.6 | 14.0 |

TABLE 5 (continued)

| Bottoms Properties at 43 wt% 650°F+ Conversion | | |
|---|---|---|
| 730°F+ Properties | Example 22 | Example 24 |
| Composition, wt % | | |
| | | |
| Simulated Dist., wt % °C (°F) | | |
| IBP/5<br>10/50 | 343/377 (650/711)<br>389/438 (733/820) | 372/388 (701/731)<br>396/436 (745/817) |

It can be seen that the MCM-41 catalyst of Example 23 was much more effective in reducing the nitrogen level of the bottoms to a very low level of 3 ppm as compared to a 15 ppm level for the catalyst of Example 21. Also, the degree of aromatic saturation for the MCM-41 catalyst was improved by 23% over the DHC-6 catalyst. Aromatics level dropped from 19.6 to 14.0 wt %. This can impact the quality of the bottoms for lube upgrading applications since lower aromatics levels are desired for producing premium quality high viscosity index lubes.

Example 25

Preparation of NiW/MCM-41/USY/$Al_2O_3$ hydrocracking catalyst.

The product of Example 22 was exchanged with aqueous solutions of ammonium nitrate and subsequently dried overnight at 121°C (250°F). A portion of the resultant material was combined with alumina and a commercial USY (TOSOH HSZ-360HUA) to form a mixture of 40 parts, by weight, MCM-41, 40 parts USY, and 20 parts $Al_2O_3$. Water was added to this mixture to allow the resulting catalyst to be formed into extrudates.

The catalyst was activated by calcination as described in Example 22 above except that the calcination of the unimpregnated catalyst was completed in air at 538°C (1000°F) for 12 hours. Incorporation of the nickel and tungsten was made in the same way as described above. Physical and chemical properties of the NiW/MCM-41/USY/$Al_2O_3$ catalyst are shown in Table 6 below:

Table 6

| NiW/MCM-41/USY Hydrocracking Catalyst Properties | |
|---|---|
| Nickel, wt % | 4.4 |
| Tungsten, wt % | 14.8 |
| Sodium, ppm | 80 |
| Surface Area, $m^2/g$ | 430 |
| Pore Volume, ml/g | 1.000 |
| Particle Density, g/ml | 0.753 Real Density, g/ml |
| 3.046 | |

Example 26

The catalyst of Example 25 was used as a hydrocracking catalyst in a set of moderate pressure hydrocracking runs. The same feed and process conditions as in Example 21 were used. The hydrotreating catalyst for this set of runs was a commercial Nimo/$Al_2O_3$ catalyst (HDN-60, American Cyanamid). The reactor was filled with 6.27 grams (8.0 ml) of HDN-60 and 4.45 grams (12.0 ml) of the composite NiW/MCM-41/USY catalyst. Severity was varied by adjusting reactor temperature from 371°-393°C (700°-740°F). The results of these runs are summarized in Figures 1 and 2.

The activity comparison of the results of Examples 21, 25 and 26 is shown in Figure 1. It can be seen that conversion activity for the composite catalyst was improved as compared to the DHC-6 and MCM-41 catalyst systems.

Figure 2 shows the 343°C- (650°F-) product selectivities as a function of 343°C- (650°F-) boiling range conversion for the results of Examples 21, 25 and 26. These data show that kerosene 166°-227°C (330°-440°F) and distillate 227°-343°C (440°-650°F) selectivities are comparable for the MCM-41/USY catalyst as compared to the DHC-6 and MCM-41 catalysts. These results are also shown in tabular form for a conversion level of 45 wt% target feed conversion, in Table 7 below.

Table 7

| Hydrocracking of VGO Blend (45 wt % Conversion. 1200 psig. 0.5 LHSV) | | | |
|---|---|---|---|
| Catalyst | DHC-2/DHC-6 | DHC-2/NiW-MCM41 | HDN-60/NiW USY/MCM41 |
| Reactor Temp., °C (°F) | 396 (745) | 401 (753) | 389 (732) |
| Product Composition, wt % | | | |
| C1-C4 | 2.6 | 4.0 | 3.5 |
| C5-330° | 11 | 10.5 | 10.5 |
| 330-440° | 9.5 | 9.0 | 10.0 |
| 440-650° | 22.5 | 22.5 | 22.0 |
| 650-750° | 18 | 18 | 18 |
| 750°+ | 35 | 35 | 35 |
| $H_2$ Cons, n.l.l.$^{-1}$ (SCF/Bbl) | 125-134 (700-750) | 151 (850) | 169 (950) |

Improvements in conversion activity were obtained by the USY/MCM-41 composite catalyst and that there is a decrease in light gas yield compared to the MCM-41 catalyst. These results show that an MCM-41 ultra-large pore molecular sieve in combination with a smaller pore molecular sieve, can produce kerosene and distillate yields comparable to an amorphous catalyst system, but with better hydrocracking activity.

The use of an ultra-large pore molecular sieve for hydrocracking, especially at the low to moderate hydrogen pressure described above, provides an attractive option for obtaining kerosene and distillate selectivities which compare to state-of-the-art amorphous based catalysts. Benefits of utilizing these catalysts in processes of this kind include an increase in bottoms quality and a potential increase in stability, since molecular sieves have been shown to be more stable than amorphous catalysts. In addition, the very high surface area possessed by the present mesoporous supports materials is of especial benefit in fuels hydrocracking where the catalyst needs a high degree of acidic functionality to provide the cracking function. In conventional zeolitic hydrocracking catalysts, this would be provided by a high zeolite loading in the catalyst but for the fact that this would reduce the amount of matrix material available to support the metal function. The high surface area of the mesoporous supports, however, enables high metal loadings to be readily accommodated while still providing adequate acidic functionality.

## Claims

1. A hydrocracking process which comprises contacting a hydrocarbon feed having an initial boiling point no higher than 345°C (650°F) in the presence of hydrogen with a bifunctional hydrocracking catalyst having acidic functionality and hydrogenation-dehydrogenation functionality, and comprising an inorganic, porous crystalline phase material having pores with diameters of at least 13 Angstrom Units and exhibiting, after calcination, an X-ray diffraction pattern with at least one peak at a d-spacing greater than 18 Å with a relative intensity of 100.

2. A hydrocracking process according to claim 1 in which the crystalline phase exhibits, after calcination, a hexagonal arrangement of uniformly sized pores with diameters of at least 13 Å and which exhibits, after calcination, a hexagonal electron diffraction pattern that can be indexed with a $d_{100}$ value greater than 18 Angstrom Units.

3. A hydrocracking process according to claim 1 wherein the crystalline phase has an X-ray diffraction pattern following calcination with at least one peak whose d-spacing corresponds to the $d_{100}$ value from the electron diffraction pattern.

4. A hydrocracking process according to claim 1 wherein the crystalline phase exhibits a benzene adsorption capacity of greater than about 15 grams benzene per 100 grams at 6.7 kPa (50 torr) and 25°C.

**5.** A hydrocracking process according to claim 1 wherein the crystalline phase has a composition expressed as follows:

$$M_{n/q}(W_aX_bY_cZ_dO_h)$$

wherein M is one or more ions; n is the charge of the composition excluding M expressed as oxides; q is the weighted molar average valence of M; n/q is the number of moles or mole fraction of M; W is one or more divalent elements; X is one or more trivalent elements; Y is one or more tetravalent elements; Z is one or more pentavalent elements; a, b, c, and d are mole fractions of W, X, Y, and Z, respectively; h is a number of from 1 to 2.5; and (a+b+c+d) = 1.

**6.** A hydrocracking process according to claim 5 wherein W comprises a divalent first row transition metal or magnesium; X comprises aluminum, boron, gallium or iron; Y comprises silicon or germanium; and Z comprises phosphorus.

**7.** A hydrocracking process according to claim 5 wherein a and d are 0 and h = 2.

**8.** A hydrocracking process according to claim 7 wherein X comprises aluminum, boron, gallium or iron and Y comprises silicon or germanium.

**9.** A hydrocracking process according to claim 8 wherein X comprises aluminum and Y comprises silicon.

**10.** A hydrocracking process according to claim 1 in which the catalyst comprises at least one metal of Groups VIA, VIIA or VIIIA of the Periodic Table.

**11.** A hydrocracking process according to claim 1 in which the catalyst comprises at least one metal of Group VIA and at least one metal of Group VIIIA of the Periodic Table.

**12.** A hydrocracking process according to claim 1 in which the feed is contacted with the catalyst at a pressure of from 2900 to 10600 kPa (400 to 1500 psig) (reactor inlet), a temperature from 288° to 440°C (550° to 825°F), and a space velocity from 0.2 to 2.0 LHSV.

**13.** A hydrocracking process according to claim 12 in which the feed is contacted with the catalyst at a pressure of from 5600 to 8400 kPa (800 to 1200 psig) (reactor inlet), a temperature from 343° to 427°C (650° to 800°F), and a space velocity from 0.5 to 2.0 LHSV.

**14.** A hydrocracking process according to claim 1 in which the conversion to lower boiling range products is from 30 to 70 wt %.

**15.** A process according to claim 14 in which the conversion to 343°C- (650°F-) products is from 30 to 70 wt %.

**16.** A hydrocracking process according to claim 1 in which the conversion to lower boiling range products is from 40 to 70 wt %.

**17.** A process according to claim 16 in which the conversion to 343°C- (650°F-) products is from 40 to 70 wt %.

**18.** A process according to any one of the preceding claims wherein the catalyst additionally comprises a zeolite component.

**19.** A process according to claim 18 in which the zeolite component comprises a large pore size zeolite having pores with an average pore size of at least 7.4 A.

**20.** A process according to claim 19 in which the zeolite component comprises a zeolite having the faujasite structure.

**21.** A process according to claim 20 in which the zeolite component comprises zeolite Y.

**22.** A process according to claim 21 in which the zeolite component comprises zeolite USY.

**23.** A process according to claim 18 in which the zeolite component comprises an intermediate pore size zeolite.

**24.** A process according to claim 23 in which the zeolite component comprises ZSM-5 as the intermediate pore size zeolite.

**Patentansprüche**

**1.** Hydrocrackverfahren, das den Kontakt einer Kohlenwasserstoffbeschickung mit einem Anfangssiedepunkt von nicht mehr als 345°C (650°F) in Gegenwart von Wasserstoff mit einem bifunktionellen Hydrocrackkatalysator umfaßt, der eine saure Funktionalität und eine Hydrierungs/Dehydrierungs-Funktionalität hat und ein anorganisches, poröses Material mit kristalliner Phase umfaßt, das Poren mit Durchmessern von mindestens 13 Angström-Einheiten aufweist und nach dem Kalzinieren ein Röntgenbeugungsdiagramm mit mindestens einem Peak bei einem d-Abstand von mehr als 18 Å mit einer relativen Intensität von 100 zeigt.

**2.** Hydrocrackverfahren nach Anspruch 1, wobei die kristalline Phase nach dem Kalzinieren eine hexagonale Anordnung von Poren mit einheitlichen Abmessungen mit Durchmessern von mindestens 13 Å zeigt und nach dem Kalzinieren ein hexagonales Elektronenbeugungsdiagramm zeigt, daß mit einem $d_{100}$-Wert von mehr als 18 Angström-Einheiten indexiert werden kann.

**3.** Hydrocrackverfahren nach Anspruch 1, wobei die kristalline Phase nach dem Kalzinieren ein Röntgenbeugungsdiagramm mit mindestens einem Peak aufweist, dessen d-Abstand dem $d_{100}$-Wert aus dem Elektronenbeugungsdiagramm entspricht.

**4.** Hydrocrackverfahren nach Anspruch 1, wobei die kristalline Phase bei 6,7 kPa (50 Torr) und 25°C eine Adsorptionskapazität für

**5.** Hydrocrackverfahren nach Anspruch 1, wobei die kristalline Phase eine wie folgt ausgedrückte Zusammensetzung hat:

$$M_{n/q}(W_aX_bY_cZ_dO_h)$$

worin M ein oder mehrere Ionen ist, n die Ladung der Zusammensetzung ist, M ausgenommen, als Oxide ausgedrückt, q die gewichtete mittlere molare Valenz von M ist, n/q die Anzahl der Mole oder der Molenbruch von M ist, W ein oder mehrere zweiwertige Elemente darstellt, X ein oder mehrere dreiwertige Elemente darstellt, Y ein oder mehrere mehrwertige Elemente darstellt; Z ein oder mehrere fünfwertige Elemente darstellt, a, b, c und d die Molenbrüche von W, X, Y bzw. Z sind, h eine Zahl von 1 bis 2,5 ist und (a+b+c+d) = 1 ist.

**6.** Hydrocrackverfahren nach Anspruch 5, wobei W ein zweiwertiges Übergangsmetall der ersten Reihe oder Magnesium umfaßt, X Aluminium, Bor, Gallium oder Eisen umfaßt; Y Silicium oder Germanium umfaßt und Z Phosphor umfaßt.

**7.** Hydrocrackverfahren nach Anspruch 5, wobei a und d 0 sind und h = 2 ist.

**8.** Hydrocrackverfahren nach Anspruch 7, wobei X Aluminium, Bor, Gallium oder Eisen umfaßt und Y Silicium oder Germanium umfaßt.

**9.** Hydrocrackverfahren nach Anspruch 8, wobei X Aluminium und Y Silicium umfaßt.

**10.** Hydrocrackverfahren nach Anspruch 1, wobei der Katalysator mindestens ein Metall der Gruppen VIA, VIIA oder VIIIA des Periodensystems umfaßt.

**11.** Hydrocrackverfahren nach Anspruch 1, wobei der Katalysator mindestens ein Metall der Gruppe VIA und mindestens ein Metall der Gruppe VIIIA des Periodensystems umfaßt.

**12.** Hydrocrackverfahren nach Anspruch 1, wobei die Beschickung bei einem Druck von 2900 bis 10600 kPa (400 bis 1500 psig) (Reaktoreinlaß), einer Temperatur von 288 bis 440°C (550 bis 825°F) und einer Raumgeschwindigkeit

von 0,2 bis 2,0 LHSV mit dem Katalysator in Kontakt gebracht wird.

**13.** Hydrocrackverfahren nach Anspruch 12, wobei die Beschickung bei einem Druck von 5600 bis 8400 kPa (800 bis 1200 psig) (Reaktoreinlaß), einer Temperatur von 343 bis 427°C (650 bis 800°F) und einer Raumgeschwindigkeit von 0,5 bis 2,0 LHSV mit dem Katalysator in Kontakt gebracht wird.

**14.** Hydrocrackverfahren nach Anspruch 1, wobei die Umwandlung in Produkte mit einem geringeren Siedebereich 30 bis 70 Gew.-% beträgt.

**15.** Verfahren nach Anspruch 14, wobei die Umwandlung in Produkte mit 343°C- (650°F-) 30 bis 70 Gew.-% beträgt.

**16.** Hydrocrackverfahren nach Anspruch 1, wobei die Umwandlung in Produkte mit einem geringeren Siedebereich 40 bis 70 Gew.-% beträgt.

**17.** Verfahren nach Anspruch 16, wobei die Umwandlung in Produkte mit 343°C- (650°F-) 40 bis 70 Gew.-% beträgt.

**18.** Verfahren nach einem der vorstehenden Ansprüche, wobei der Katalysator außerdem eine Zeolithkomponente umfaßt.

**19.** Verfahren nach Anspruch 18, wobei die Zeolithkomponente einen großporigen Zeolith mit Poren mit einer mittleren Porengröße von mindestens 7,4 Å umfaßt.

**20.** Verfahren nach Anspruch 19, wobei die Zeolithkomponente einen Zeolith mit der Struktur von Faujasit umfaßt.

**21.** Verfahren nach Anspruch 20, wobei die Zeolithkomponente Zeolith Y umfaßt.

**22.** Verfahren nach Anspruch 21, wobei die Zeolithkomponente Zeolith USY umfaßt.

**23.** Verfahren nach Anspruch 18, wobei die Zeolithkomponente einen Zeolith mit mittlerer Porengröße umfaßt.

**24.** Verfahren nach Anspruch 23, wobei die Zeolithkomponente als Zeolith mit mittlerer Porengröße ZSM-5 umfaßt.

**Revendications**

**1.** Un procédé d'hydrocraquage qui comprend la mise en contact d'une charge hydrocarbonée ayant un point d'ébullition initiale non supérieur à 345°C (650°F), en présence d'hydrogène, avec un catalyseur d'hydrocraquage bifonctionnel ayant une fonctionnalité acide et une fonctionnalité d'hydrogénation-déshydrogénation, et comprenant une substance inorganique, poreuse à phase cristalline ayant des pores de diamètre d'au moins 13 Angstroems et présentant, après calcination, un spectre de diffraction aux rayons-X comportant au moins un pic à une distance d supérieure à 18 Å et ayant une intensité relative de 100.

**2.** Un procédé d'hydrocraquage selon la revendication 1, dans lequel la phase cristalline présente, après calcination, une disposition hexagonale de pores de taille uniforme d'un diamètre d'au moins 13 Å et qui présente, après calcination, un spectre de diffraction électronique hexagonal, qui peut être indexé à une valeur de $d_{100}$ supérieure à 18 Å.

**3.** Un procédé d'hydrocraquage selon la revendication 1, dans lequel la phase cristalline présente un spectre de distraction aux rayons-X, après calcination, comportant au moins un pic dont la distance d correspond à la valeur de $d_{100}$ d'après le spectre de diffraction électronique.

**4.** Un procédé d'hydrocraquage selon la revendication 1, dans lequel la phase cristalline présente une capacité d'absorption du benzène supérieure à environ 15 grammes de benzène par 100 grammes à 6,7 kPa (50 torrs) et 25°C.

**5.** Un procédé d'hydrocraquage selon la revendication 1. dans lequel la phase cristalline présente une composition exprimée comme suit :

$$M_{n/q}(W_aX_bY_cZ_dO_h)$$

où

| | |
|---|---|
| M | représente un ou plusieurs ions ; |
| n | est la charge de la composition à l'exclusion de M exprimé en oxyde ; |
| q | est la valence moyenne molaire pondérée de M ; |
| n/q | est le nombre de moles ou fraction molaire de M ; |
| W | représente un ou plusieurs éléments divalents ; |
| X | représente un ou plusieurs éléments trivalents ; |
| Y | représente un ou plusieurs éléments tétravalents ; |
| Z | représente un ou plusieurs éléments pentavalents ; |
| a, b, c et d | représentent les fractions molaires de W, X, Y et Z respectivement ; |
| h | est un nombre de 1 à 2,5 et |
| (a+b+c+d) = | 1 . |

**6.** Un procédé d'hydrocraquage selon la revendication 5, dans lequel

| | |
|---|---|
| W | comprend un métal de transition divalent de la première rangée ou le magnésium ; |
| X | comprend l'aluminium, le bore, le gallium ou le fer ; |
| Y | comprend le silicium ou le germanium ; et |
| Z | comprend le phosphore. |

**7.** Un procédé d'hydrocraquage selon la revendication 5, dans lequel a et d sont égaux 0 et h = 2.

**8.** Un procédé d'hydrocraquage selon la revendication 7, dans lequel X comprend l'aluminium, le bore, le gallium ou le fer et Y comprend le silicium ou le germanium.

**9.** Un procédé d'hydrocraquage selon la revendication 8, dans lequel X comprend l'aluminium et Y comprend le silicium.

**10.** Un procédé d'hydrocraquage selon la revendication 1, dans lequel le catalyseur comprend au moins un métal des groupes VIA, VIIA ou VIIIA du tableau périodique.

**11.** Un procédé d'hydrocraquage selon la revendication 1, dans lequel le catalyseur comprend au moins un métal du groupe VIA et au moins un métal du groupe VIIIA du tableau périodique.

**12.** Un procédé d'hydrocraquage selon la revendication 1, dans lequel la charge est mise en contact avec le catalyseur sous une pression de 2900 à 10600 kPa (400 à 1500 psi) (entrée du réacteur), à une température de 288°C à 440°C (550°F à 825°F) et une vitesse spatiale de 0,2 à 2,0 LHSV.

**13.** Un procédé d'hydrocraquage selon la revendication 12, dans lequel la charge est mise en contact avec le catalyseur sous une pression de 5600 kPa à 10600 kPa (800 à 1500 psig) (entrée du réacteur), à une température de 343°C à 427°C (650°F à 800°F) et une vitesse spatiale de 0,5 à 2,0 LHSV.

**14.** Un procédé d'hydrocraquage selon la revendication 1, dans lequel la conversion en produits de domaine de points d'ébullition plus bas est de 30 à 70 % en poids.

**15.** Un procédé selon la revendication 14, dans lequel la conversion en produits à 343°C- (650°F-) est de 30 à 70 % en poids.

**16.** Un procédé hydrocraquage selon la revendication 1, dans lequel la conversion en produits de domaine de points d'ébullition plus bas est de 40 à 70 % en poids.

**17.** Un procédé selon la revendication 16, dans lequel la conversion en produits à 343°C- (650°F-) est de 40 à 70 % en poids.

**18.** Un procédé selon une quelconque des revendications précédentes dans lequel le catalyseur comprend en outre un composant zéolitique.

**19.** Un procédé selon la revendication 18, dans lequel le composant zéolitique comprend une zéolite à grands pores ayant des pores d'une taille de pore moyenne d'au moins 7.4 Å.

**20.** In procédé selon la revendication 19, dans lequel le composant zéolitique comprend une zéolite ayant la structure de la faujaside.

**21.** Un procédé selon la revendication 20, dans lequel le composant zéolitique comprend la zéolite Y.

**22.** Un procédé selon la revendication 21, dans lequel le composant zéolitique comprend la zéolite USY.

**23.** Un procédé selon la revendication 18, dans lequel le composant zéolitique comprend une zéolite de taille de pores intermédiaire.

**24.** Un procédé selon la revendication 23, dans lequel le composant zéolitique comprend de la ZSM-5 en tant que zéolite de taille de pore intermédiaire.

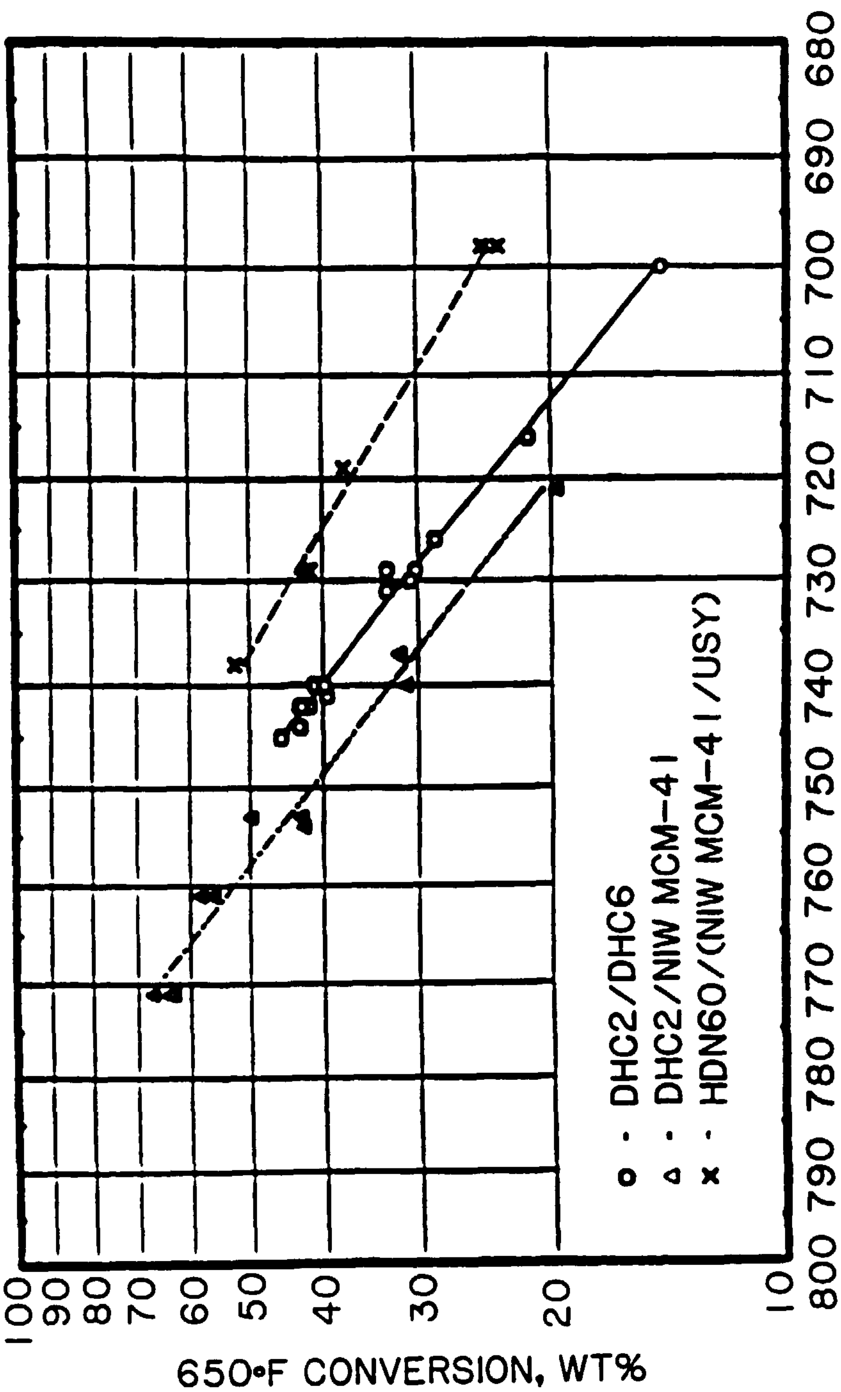
650°F CONVERSION, WT%
TEMPERATURE,°F
o - DHC2/DHC6
Δ - DHC2/NIW MCM-41
x - HDN60/(NIW MCM-41/USY)
100
90
80
70
60
50
40
30
20
10
800
790
780
770
760
750
740
730
720
710
700
690
680

FIG. 1

# FIG. 2A

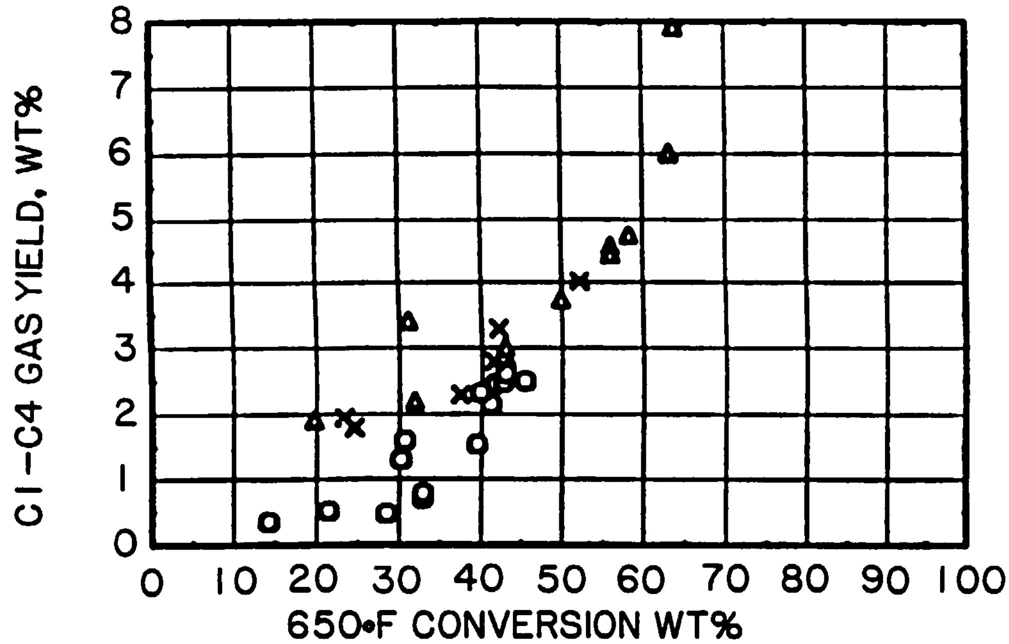
C1-C4 GAS YIELD, WT%
0
1
2
3
4
5
6
7
8
0 10 20 30 40 50 60 70 80 90 100
650°F CONVERSION WT%

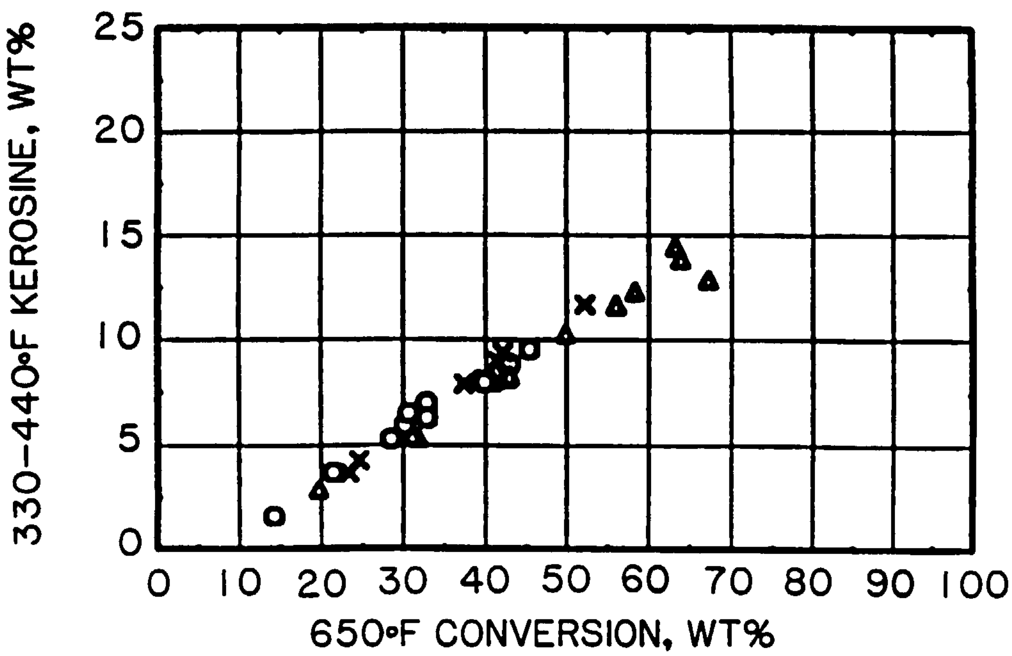
330-440°F KEROSINE, WT%
0
5
10
15
20
25
0 10 20 30 40 50 60 70 80 90 100
650°F CONVERSION, WT%

# FIG. 2B

FIG. 2C

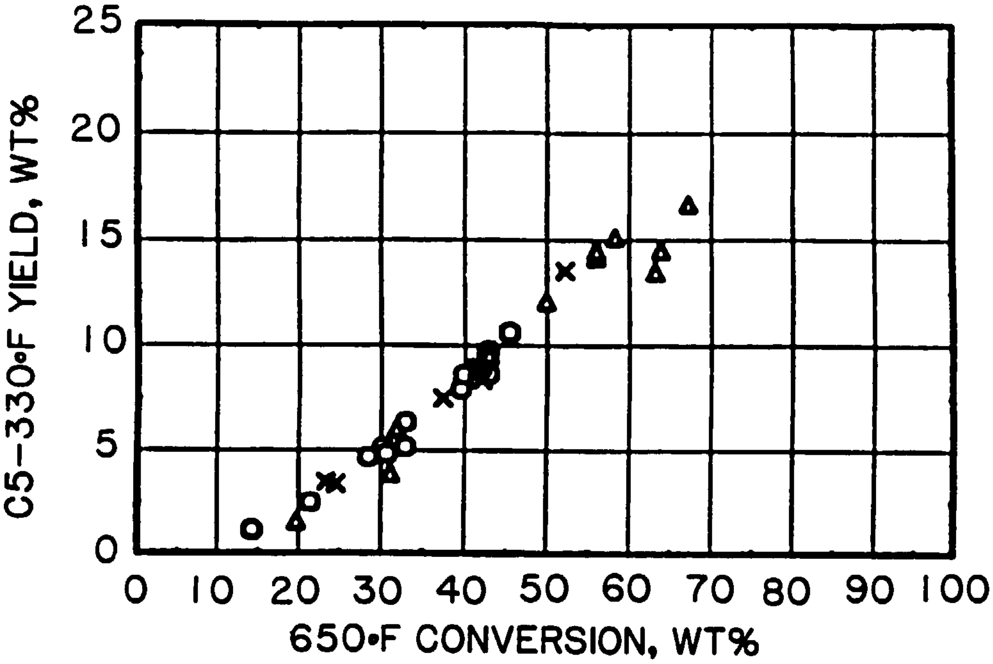
C5-330•F YIELD, WT%
0
5
10
15
20
25
0 10 20 30 40 50 60 70 80 90 100
650•F CONVERSION, WT%

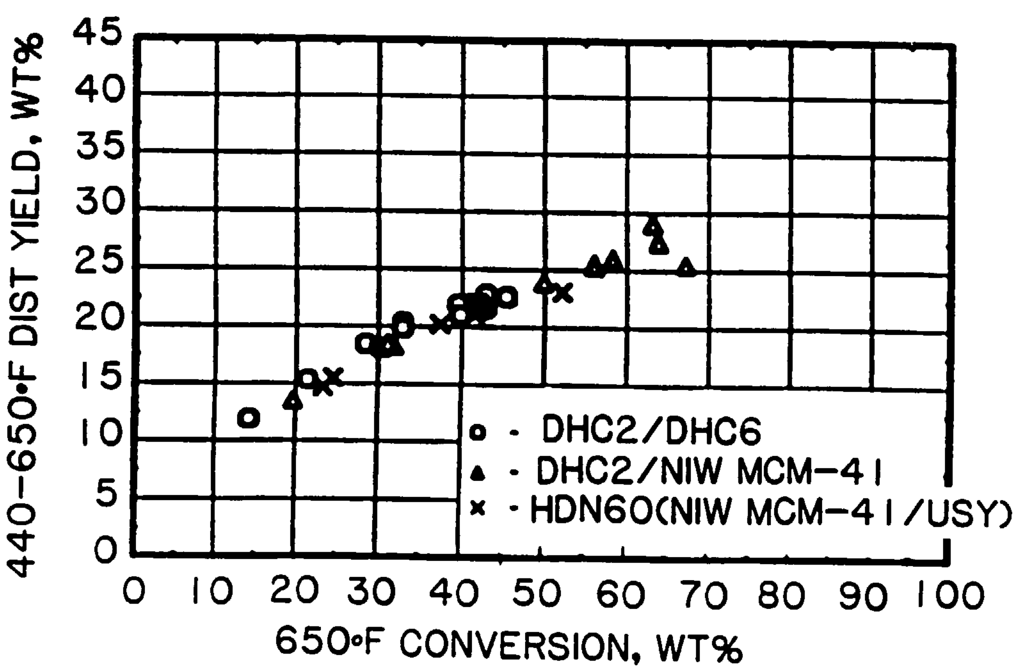
440-650•F DIST YIELD, WT%
0
5
10
15
20
25
30
35
40
45
o - DHC2/DHC6
▲ - DHC2/NIW MCM-41
× - HDN60(NIW MCM-41/USY)
0 10 20 30 40 50 60 70 80 90 100
650°F CONVERSION, WT%

FIG. 2D